(19) Europäisches Patentamt / European Patent Office / Office européen des brevets

(11) **EP 4 197 871 B1**

(12) **EUROPEAN PATENT SPECIFICATION**

(45) Date of publication and mention
of the grant of the patent:
**14.05.2025 Bulletin 2025/20**

(21) Application number: **21865810.2**

(22) Date of filing: **17.08.2021**

(51) International Patent Classification (IPC):
***B60W 40/08*** *(2012.01)*

(52) Cooperative Patent Classification (CPC):
**B60W 40/08; B60K 28/063;** B60W 2040/0818;
B60W 2050/0029; B60W 2420/403;
B60W 2540/043; B60W 2540/221; B60W 2540/223;
B60W 2540/24; B60W 2552/15; B60W 2556/50;
B60Y 2302/05

(86) International application number:
**PCT/CN2021/113043**

(87) International publication number:
**WO 2022/052754 (17.03.2022 Gazette 2022/11)**

(54) **DRIVING BEHAVIOR MONITORING METHOD AND APPARATUS**

VERFAHREN UND VORRICHTUNG ZUR ÜBERWACHUNG DES FAHRVERHALTENS

PROCÉDÉ ET APPAREIL DE SURVEILLANCE DE COMPORTEMENT DE CONDUITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.09.2020 CN 202010947186**

(43) Date of publication of application:
**21.06.2023 Bulletin 2023/25**

(73) Proprietor: **Shenzhen Yinwang Intelligent
Technologies Co., Ltd.
Shenzhen, Guangdong 518129 (CN)**

(72) Inventor: **ZHANG, Yuming
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
EP-A1- 2 945 133          WO-A2-2009/007844
WO-A2-2015/162598     CN-A- 105 662 407
CN-A- 108 446 600      CN-A- 108 694 813
CN-A- 108 928 294      CN-A- 110 696 834
US-A1- 2012 245 763    US-A1- 2013 116 856
US-A1- 2020 241 525

Description

## TECHNICAL FIELD

This disclosure relates to the technical field of automobile safety, and the invention specifically relates to driving behavior monitoring methods and a terminal apparatus as well as a computer-readable storage medium.

## BACKGROUND

With the rapid development of economy and the pace of life, automobiles and other transportation vehicles have become an indispensable tool in people's daily life. However, with the increase of transportation vehicles, a large quantity of traffic accidents have occurred in recent years, and casualties are caused. According to data released by the World Health Organization in December 2018, traffic accidents cause about 1.35 million deaths each year.

Improper driving behaviors, such as fatigue driving and drunk driving, are important causes of traffic accidents. Therefore, a solution for monitoring driving behaviors of drivers is urgently needed to improve traffic safety.

US 2013/116856 A1 discloses a method for operating a vehicle system of a motor vehicle for determining at least one state variable which describes the state of the driver, in particular the attention and/or fatigue of the driver, wherein the state variable is determined by using a reference data set which describes a reference state, in particular a normal state of the driver, wherein the conditions of a condition group are verified during an entire drive of the motor vehicle, and wherein when all conditions are established a reference data set is recorded so long as all conditions are established and the reference data set is analyzed for calibrating and/or adjusting at least one operating parameter of the vehicle system.

US 2020/241525 AI discloses a computer-based apparatus system for assessing, predicting, correcting, recovering, and reducing risk arising from an operator's deficient situation awareness (SA). This system identifies operator situation awareness by computer-apparatus and method that utilizes neurogenic-psychophysiological-neurocognitive-artificial intelligence processes. This system is configured to receive psychophysiological data from the operator via the neurogenic sensor(s) and configured to be loaded with data corresponding to the operator's baseline SA capacity and/or possesses AI algorithms to learn and calibrate the operator's baseline SA capacity and sound a warning in response if an SA deficiency threshold has been exceeded. Optionally, an autopilot/auto-driver/auto-operator/auto-worker/student alert/player & coach alert interface is configured to activate an autopilot/auto-driver/auto-operator/auto-worker command in response an SA deficiency threshold has been exceeded.

## SUMMARY

The object of the present invention is to provide driving behavior monitoring methods and a terminal apparatus as well as a computer-readable storage medium, so as to provide improved monitoring of a driving behavior. This object is solved by the attached independent claims and further embodiments and improvements of the invention are listed in the attached dependent claims. Hereinafter, up to the "brief description of the drawings", expressions like "... aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

According to a first aspect, wherein the first aspect and its designs, implementations and embodiments below relate to the invention as claimed in the attached claims, the invention concerns a driving behavior monitoring method, including:

> determining a state evaluation value of a driving behavior according to a state parameter of a driver in a driving process,
> determining a state threshold of the driving behavior according to a state threshold determining parameter of the driving behavior; and
> determining a type of the driving behavior according to the state evaluation value of the driving behavior and the state threshold of the driving behavior.

According to the foregoing steps, a type of a driving behavior can be determined, so as to determine whether the driving behavior is an improper driving behavior. In addition, a state threshold of the driving behavior determined in embodiments of this application better conforms to a current driving behavior monitoring scenario. Compared with a solution using a fixed threshold, in this application, accuracy of driving behavior monitoring can be effectively improved.

In an optional design, the state parameter may include: a facial expression parameter and/or a physiological information parameter.

The facial expression parameter may include: a quantity of times of opening and closing eyes per unit time and/or a quantity of times of opening and closing the mouth per unit time.

The physiological information parameter may include at least one of the following parameters: a quantity of pulses per unit time, a heart rate, blood pressure, and body temperature.

A time difference between a determining time point of the state parameter and a determining time point of the evaluation value nay be less than a first time period.

If the determining time point of the state parameter is closer to the determining time point of the evaluation value, the evaluation value is usually closer to an actual driving scenario. Specific duration of the first time period may be set according to a driving behavior monitoring requirement. Generally, a higher accuracy requirement for driving behavior monitoring indicates shorter specific duration of the first time period.

In an optional design, the facial expression parameter may be obtained by using an imaging apparatus that shoots an image of the driver.

The physiological information parameter may be obtained by using an intelligent wearable device of the driver.

In an optional design, the state evaluation value of the driving behavior is determined by using the following formula:

$$w_{\text{evaluation}} = \frac{n1 - \sum_{i=1}^{n1}\left(\frac{C_i - C_{i0}}{C_{i0}}\right)}{n1},$$

where

$w_{\text{evaluation}}$ is the state evaluation value of the driving behavior, $n1$ is a quantity of state parameters, $C_i$ is the $i^{\text{th}}$ state parameter, $C_{i0}$ is a reference value of the $i^{\text{th}}$ state parameter, $i$ and $n1$ are both positive integers, and $i \leq n1$ ; and the reference value of the $i^{\text{th}}$ state parameter is the $i^{\text{th}}$ state parameter of the driver in a normal driving process.

In an optional design, the state threshold determining parameter includes at least one of the following parameters: a danger coefficient of a location of the driver, a fatigue degree coefficient of the driver, a density degree coefficient of the location of the driver, or a danger coefficient of an environment in which the driver is located.

A time difference between a determining time point of the state threshold determining parameter and a determining time point of the state threshold of the driving behavior is less than a second time period.

In an optional design, the danger coefficient of the location of the driver is determined by using the following formula:

$$k = \left(\sum_{l=1}^{n2} p_l * j_l\right) * v,$$

where

$k$ is the danger coefficient of the location of the driver, $n2$ is a type of a traffic accident of a state target value at the location of the driver, $p_l$ is a probability that an $l^{\text{th}}$ type of target traffic accident occurs at the location of the driver, $j_l$ is a danger coefficient of the $l^{\text{th}}$ type of target traffic accident, V is a vehicle speed, $l$ and $n2$ are both positive integers, $l \leq n2$, and the target traffic accident is a traffic accident whose occurrence probability is greater than a first probability.

The fatigue degree coefficient of the driver is determined by using the following formula:

$$l = \begin{cases} 0, & t = 0 \\ \dfrac{t}{T} * 100\%, & 0 < t < T \\ 1, & t \geq T \end{cases},$$

where

$l$ is the fatigue degree coefficient of the driver, $t$ is driving duration of the driver, and $T$ is a first time length.

The density degree coefficient of the location of the driver is determined by using the following formula:

$$c = a1 * b1 + a2 * b2 + a3 * b3 \, ,$$

where

$C$ is the density degree coefficient of the location of the driver, $a1$, $a2$, and $a3$ are positive numbers, $b1$ is a sum of quantities of pedestrians and vehicles in a first range from the location of the driver, $b2$ is a sum of quantities of pedestrians and vehicles in a second range from the location of the driver, and $b3$ is a sum of quantities of pedestrians and vehicles in a third range from the location of the driver.

The danger coefficient of the environment in which the driver is located is determined by using the following formulas:

$$D = \partial / 90^0 * 100\% \, ,$$

and

$$m = (g - s) * a4 + D * a5 \, ,$$

where

$D$ is a ground steepness degree of the location of the driver, $\partial$ is an angle between a body of a vehicle in which the driver is located and a horizontal plane, $g$ is a the highest level of visibility level, $S$ is a visibility level of the environment in which the driver is located, and $a4$ and $a5$ are positive numbers.

In an optional design, the state threshold of the driving behavior is determined according to the following formula:

$$v = \frac{\sum_{z=1}^{n3} q_z * r_z}{n3} \, ,$$

where

$V$ is the state threshold of the driving behavior, $n3$ is a quantity of types of the state threshold determining parameter, $q_z$ is a weight of a $Z^{th}$ type of state threshold determining parameter, $r_z$ is the $Z^{th}$ type of state threshold determining parameter, $z$ and $n3$ are both positive integers, and $z \leq n3$.

According to the invention, the determining a type of the driving behavior according to the state evaluation value of the driving behavior and the state threshold of the driving behavior includes:

determining a state target value of the normal driving behavior according to a reference value of a normal driving behavior and the state threshold of the driving behavior; and

determining the type of the driving behavior according to a comparison result between the state evaluation value of the driving behavior and the state target value of the normal driving behavior.

In an optional design, the state target value of the normal driving behavior is determined by using the following formula:

$$w_{\text{target}} = w_{\text{reference}} * (100\% + v) \, ,$$

where

$w_{\text{target}}$ is the state target value of the normal driving behavior, $w_{\text{target}}$ is the reference value of the normal driving behavior, and $V$ is the state threshold of the driving behavior.

In an optional design, the determining the type of the driving behavior according to a comparison result between the state evaluation value of the driving behavior and the state target value of the normal driving behavior includes:

when a difference between the state evaluation value of the driving behavior and the state target value of the normal driving behavior is greater than a first threshold, determining that the driving behavior is the normal driving behavior;

when a difference between the state evaluation value of the driving behavior and the state target value of the normal driving behavior is greater than a second threshold and is not greater than the first threshold, determining that the driving behavior indicates that the driver is in an abnormal driving state but has a driving ability; or

when a difference between the state evaluation value of the driving behavior and the state target value of the normal driving behavior is not greater than the second threshold, determining that the driving behavior indicates that the driver is in an abnormal driving state and does not have a driving ability.

The first threshold is not less than 0, and the second threshold is a negative number.

In an optional design, the method further includes:

alerting the driver when the type of the driving behavior indicates that the driver is in an abnormal driving state but has a driving ability; and
parking the vehicle on a roadside when the driving behavior indicates that the driver is in an abnormal driving state and does not have a driving ability.

In an optional design, the method further includes:
when determining, by using a sweat detector, that an alcohol content in sweat of the driver is less than a first content, triggering the vehicle to start.

In an optional design, the method further includes:
when a fingerprint of the driver matches a stored fingerprint library, triggering the vehicle to start.

According to a second aspect, wherein the second aspect and its designs, implementations and embodiments below do not relate to the invention as claimed in the attached claims. The second aspect, however, serves illustration and further understanding of the invention as claimed and provides a driving behavior monitoring apparatus, including:
a processor, a first transceiver interface, and a second transceiver interface.

The first transceiver interface is configured to obtain a state parameter of a driver in a driving process.

The second transceiver interface is configured to obtain a state threshold determining parameter of a driving behavior.

The processor is configured to determine a state evaluation value of the driving behavior according to the state parameter of the driver in the driving process, and determine a state threshold of the driving behavior according to the state threshold determining parameter of the driving behavior.

The processor is further configured to determine a type of the driving behavior according to the state evaluation value of the driving behavior and the state threshold of the driving behavior.

In an optional design, the state parameter includes: a facial expression parameter and/or a physiological information parameter.

The facial expression parameter includes: a quantity of times of opening and closing eyes per unit time and/or a quantity of times of opening and closing the mouth per unit time.

The physiological information parameter includes at least one of the following parameters: a quantity of pulses per unit time, a heart rate, blood pressure, and body temperature.

A time difference between a determining time point of the state parameter and a determining time point of the evaluation value is less than a first time period.

In an optional design, the facial expression parameter is obtained by using an imaging apparatus that shoots an image of the driver.

The physiological information parameter is obtained by using an intelligent wearable device of the driver.

In an optional design, the processor determines the state evaluation value of the driving behavior by using the following formula:

$$w_{\text{evaluation}} = \frac{n1 - \sum_{i=1}^{n1}(\frac{C_i - C_{i0}}{C_{i0}})}{n1},$$

where

$w_{\text{evaluation}}$ is the state evaluation value of the driving behavior, $n1$ is a quantity of state parameters, $C_i$ is the $i^{\text{th}}$ state parameter, $C_{i0}$ is a reference value of the $i^{\text{th}}$ state parameter, $i$ and $n1$ are both positive integers, and $i \leq n1$ ; and the reference value of the $i^{\text{th}}$ state parameter is the $i^{\text{th}}$ state parameter of the driver in a normal driving process.

In an optional design, the state threshold determining parameter includes at least one of the following parameters: a danger coefficient of a location of the driver, a fatigue degree coefficient of the driver, a density degree coefficient of the location of the driver, or a danger coefficient of an environment in which the driver is located.

A time difference between a determining time point of the state threshold determining parameter and a determining time point of the state threshold of the driving behavior is less than a second time period.

In an optional design, the processor determines the danger coefficient of the location of the driver by using the following formula:

$$k = (\sum_{l=1}^{n2} p_l * j_l) * v,$$

where

$k$ is the danger coefficient of the location of the driver, $n2$ is a type of a traffic accident of a state target value at the location of the driver, $p_l$ is a probability that an $l^{th}$ type of target traffic accident occurs at the location of the driver, $j_l$ is a danger coefficient of the $l^{th}$ type of target traffic accident, $V$ is a vehicle speed, $l$ and $n2$ are both positive integers, $l \leq n2$, and the target traffic accident is a traffic accident whose occurrence probability is greater than a first probability.

The processor determines the fatigue degree coefficient of the driver by using the following formula:

$$l = \begin{cases} 0, & t = 0 \\ \dfrac{t}{T} * 100\%, & 0 < t < T, \\ 1, & t \geq T \end{cases}$$

where

$l$ is the fatigue degree coefficient of the driver, $t$ is driving duration of the driver, and $T$ is a first time length.

The processor determines the density degree coefficient of the location of the driver by using the following formula:

$$c = a1 * b1 + a2 * b2 + a3 * b3,$$

where

$C$ is the density degree coefficient of the location of the driver, $a1$, $a2$, and $a3$ are positive numbers, $b1$ is a sum of quantities of pedestrians and vehicles in a first range from the location of the driver, $b2$ is a sum of quantities of pedestrians and vehicles in a second range from the location of the driver, and $b3$ is a sum of quantities of pedestrians and vehicles in a third range from the location of the driver.

The processor determines the danger coefficient of the environment in which the driver is located by using the following formulas:

$$D = \partial / 90^0 * 100\%,$$

and

$$m = (g - s) * a4 + D * a5,$$

where

$D$ is a ground steepness degree of the location of the driver, $\partial$ is an angle between a body of a vehicle in which the driver is located and a horizontal plane, $g$ is a the highest level of visibility level, $S$ is a visibility level of the environment in which the driver is located, and $a4$ and $a5$ are positive numbers.

In an optional design, the processor determines the state threshold of the driving behavior according to the following formula:

$$v = \frac{\sum_{z=1}^{n3} q_z * r_z}{n3},$$

where

$V$ is the state threshold of the driving behavior, $n3$ is a quantity of types of the state threshold determining parameter, $q_z$ is a weight of a $Z^{th}$ type of state threshold determining parameter, $r_z$ is the $Z^{th}$ type of state threshold determining parameter, $z$

and $n3$ are both positive integers, and $z \leq n3$.

In an optional design, the processor is specifically configured to: determine a state target value of the normal driving behavior according to a reference value of a normal driving behavior and the state threshold of the driving behavior; and

determine the type of the driving behavior according to a comparison result between the state evaluation value of the driving behavior and the state target value of the normal driving behavior.

In an optional design, the processor determines the state target value of the normal driving behavior by using the following formula:

$$w_{\text{target}} = w_{\text{reference}} * (100\% + v),$$

where

$w_{\text{target}}$ is the state target value of the normal driving behavior, $w_{\text{reference}}$ is the reference value of the normal driving behavior, and $V$ is the state threshold of the driving behavior.

In an optional design, when a difference between the state evaluation value of the driving behavior and the state target value of the normal driving behavior is greater than a first threshold, the processor determines that the driving behavior is the normal driving behavior.

When a difference between the state evaluation value of the driving behavior and the state target value of the normal driving behavior is greater than a second threshold and is not greater than the first threshold, the processor determines that the driving behavior indicates that the driver is in an abnormal driving state but has a driving ability.

When a difference between the state evaluation value of the driving behavior and the state target value of the normal driving behavior is not greater than the second threshold, the processor determines that the driving behavior indicates that the driver is in an abnormal driving state and does not have a driving ability.

The first threshold is not less than 0, and the second threshold is a negative number.

In an optional design, the processor is further configured to alert the driver when the type of the driving behavior indicates that the driver is in an abnormal driving state but has a driving ability, and park the vehicle on a roadside when the driving behavior indicates that the driver is in an abnormal driving state and does not have a driving ability.

In an optional design, the processor is further configured to: when determining, by using a sweat detector, that an alcohol content in sweat of the driver is less than a first content, trigger the vehicle to start.

In an optional design, the processor is further configured to: when a fingerprint of the driver matches a stored fingerprint library, trigger the vehicle to start.

According to a third aspect according to the invention, wherein the third aspect and its designs, implementations and embodiments below relate to the invention as claimed in the attached claims, the invention also provides a terminal apparatus, including:

at least one processor and a memory.

The memory is configured to store program instructions.

The at least one processor is configured to invoke and execute the program instructions stored in the memory, and when the processor executes the program instructions, the apparatus is enabled to perform the method according to the first aspect.

According to a fourth aspect according to the invention, wherein the fourth aspect and its designs, implementations and embodiments below relate to the invention as claimed in the attached claims the invention also provides a computer-readable storage medium.

The computer-readable storage medium stores instructions, and when the instructions run on a computer, the computer is enabled to perform the method according to the first aspect.

According to a fifth not claimed aspect, embodiments of this application provide a computer program product including instructions. When the computer program product runs on an electronic device, the electronic device is enabled to perform the method according to the first aspect.

According to a sixth not claimed aspect, embodiments of this application provide a smart vehicle. The smart vehicle includes the driving behavior monitoring apparatus according to the second aspect, or the smart vehicle includes the terminal apparatus according to the third aspect.

According to a seventh not claimed aspect, embodiments of this application provide a driving behavior monitoring system. The driving behavior monitoring system includes the terminal apparatus according to the third aspect, and includes an imaging apparatus, a gyroscope, a visibility sensor, a sweat detector, and/or a fingerprint collection apparatus.

In the driving behavior monitoring method provided by the invention, a state threshold for identifying a current driving behavior is determined according to a state threshold determining parameter of the driving behavior, a state evaluation value of the driving behavior is determined according to a state parameter of a driver in a driving process, and a type of the driving behavior is then determined according to the evaluation value and the state threshold of the driving behavior. Therefore, by using the solutions provided by embodiments of this application, it can be determined whether the driving behavior is an improper driving behavior.

Further, in the solutions provided by the invention, a state threshold of a driving behavior is related to a state threshold determining parameter of the driving behavior. In a change process of the state threshold determining parameter of the driving behavior, the state threshold of the driving behavior also changes correspondingly. Therefore, a state threshold of the driving behavior determined in embodiments of this application better conforms to a current driving behavior monitoring scenario. Compared with a solution using a fixed threshold, in this application, the accuracy of driving behavior monitoring can be effectively improved.

In the following description, features which in the above summary of the invention have been marked as "not claimed" or "according to the invention" are also hereinafter, when they are described and explained with reference to the drawings, to be understood as "not claimed" or "not part of the invention" or "according to the invention" even if the features described above as belonging to the invention (i.e. marked "according to the invention") are sometimes referred to with "may" or "can" below. Such features should not be considered "optional" but essentially part of the claimed invention.

## BRIEF DESCRIPTION OF DRAWINGS

FIG. 1 is a schematic working flowchart of a driving behavior monitoring method according to an embodiment of this application;

FIG. 2 is a schematic diagram of a state evaluation value of a driving behavior and a state target value of a normal driving behavior according to an embodiment of this application;

FIG. 3 is a schematic working flowchart of another driving behavior monitoring method according to an embodiment of this application;

FIG. 4 is a schematic structural diagram of a driving behavior monitoring apparatus according to an embodiment of this application;

FIG. 5 is a schematic structural diagram of another driving behavior monitoring apparatus according to an embodiment of this application; and

FIG. 6 is a schematic diagram of a connection relationship of a driving behavior monitoring apparatus according to an embodiment of this application.

## DESCRIPTION OF EMBODIMENTS

The following describes technical solutions in embodiments of this application with reference to the accompanying drawings in embodiments of this application.

In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The following terms "first" and "second" are merely intended for a purpose of description. In the descriptions of embodiments of this application, unless otherwise specified, "a plurality of" means two or more than two.

For clear and brief description of the following embodiments, a related technology is briefly described first.

At present, automobiles and other transportation vehicles have become an indispensable tool in people's daily life. However, a large quantity of traffic accidents have occurred in recent years, and a quantity of casualties caused by traffic accidents has been increasing. Improper driving behaviors are an important cause of traffic accidents. The improper driving behaviors usually include drunk driving, fatigue driving, driving while talking, and the like.

Therefore, it is necessary to monitor driving behaviors of drivers in order to avoid improper driving behaviors and reduce the occurrence of traffic accidents.

In a current general driving behavior monitoring method, an image of a driver is collected by a camera, and the image is analyzed to determine a blinking frequency, a mouth opening frequency, and the like of the driver, which are then compared with preset frequency thresholds. It is determined whether the driver has improper driving behaviors according to comparison results.

For example, after the blinking frequency of the driver is determined by using the image of the driver, the blinking frequency may be compared with a preset blinking frequency threshold. If the blinking frequency is greater than the preset blinking frequency threshold, it may be determined that the driving behavior of the driver is improper.

However, in the method, a frequency threshold is usually fixed, and the driver has different facial expression change frequencies in different states. For example, the driver has different facial expression change frequencies when being relaxed and nervous. In addition, drivers with different personalities have different facial expression change frequencies. For example, extroverted and introverted drivers have different facial expression change frequencies in the same scenario. Therefore, determining whether a driving behavior is improper by using a fixed frequency threshold usually has low accuracy, and even causes misjudgment of the driving behavior.

In another current general driving behavior monitoring method, physiological data of a driver, for example, pulse, blood pressure, or body temperature, is collected by using a smart band worn by the driver. The physiological data is compared with a preset physiological threshold. Then it is determined, according to a comparison result, whether the driver has improper driving behaviors.

For example, after a pulse of the driver is collected by using the smart band, the pulse of the driver may be compared with a preset pulse threshold. If the pulse of the driver is greater than the pulse threshold, it may be determined that the driving behavior of the driver is improper.

However, in the method, a physiological threshold is fixed, and drivers usually have different physiological data in different states of health. Determining whether the driving behavior is improper by using the fixed physiological threshold usually has low accuracy, and even causes misjudgment of the driving behavior.

In other words, in the foregoing solutions of collecting an image of a driver by using a camera and collecting physiological data of the driver by using a smart band, when it is determined whether a driving behavior is an improper driving behavior, adopted state thresholds are all fixed, and it is difficult to meet an actual situation. Therefore, there is a problem of low accuracy.

To solve the problem of low accuracy in an existing driving behavior monitoring technology, embodiments of this application provide a driving behavior monitoring method. The method is usually applied to a driving behavior monitoring apparatus. The driving behavior monitoring apparatus may be installed in a vehicle, and monitors a driving behavior of a driver according to the solutions provided by embodiments of this application in a running process of the vehicle.

Alternatively, the driving behavior monitoring apparatus may be disposed in a remote computer. In this case, the remote computer may obtain a state parameter of the driver in a driving process, and monitor the driving behavior based on the state parameter and according to the solutions provided by embodiments of this application.

Certainly, the driving behavior monitoring apparatus may alternatively be in another form. This is not limited in embodiments of this application.

In addition, the driving behavior monitoring apparatus is usually equipped with a built-in processor. In a process of monitoring the driving behavior according to the solutions provided by embodiments of this application, the processor may obtain a state parameter and a threshold determining parameter that are transmitted by a sensor, or the processor may determine a corresponding state parameter and state threshold determining parameter according to information transmitted by the sensor, and determine a type of the driving behavior according to the state parameter and the state threshold determining parameter.

When the driving behavior monitoring apparatus is installed in a vehicle, the driving behavior monitoring apparatus may be an in-vehicle terminal of the vehicle. Correspondingly, the processor is a built-in processor of the in-vehicle terminal.

In embodiments of this application, the sensor may be disposed in the driving behavior monitoring apparatus, and is connected to the processor in the driving behavior monitoring apparatus.

Alternatively, the sensor may be a component independent of the driving behavior monitoring apparatus. After detecting corresponding information, the sensor may transmit the information to the processor, so that the processor determines the state parameter of the driver in the driving process, determines the state threshold determining parameter of the driving behavior, and determines the type of the driving behavior according to the solutions provided by embodiments of this application. In this case, an interface for exchanging data with the sensor is disposed in the processor. By using the interface, the processor may obtain the information transmitted by the sensor.

The following describes, with reference to specific accompanying drawings and work procedures, the driving behavior monitoring method disclosed by embodiments of this application.

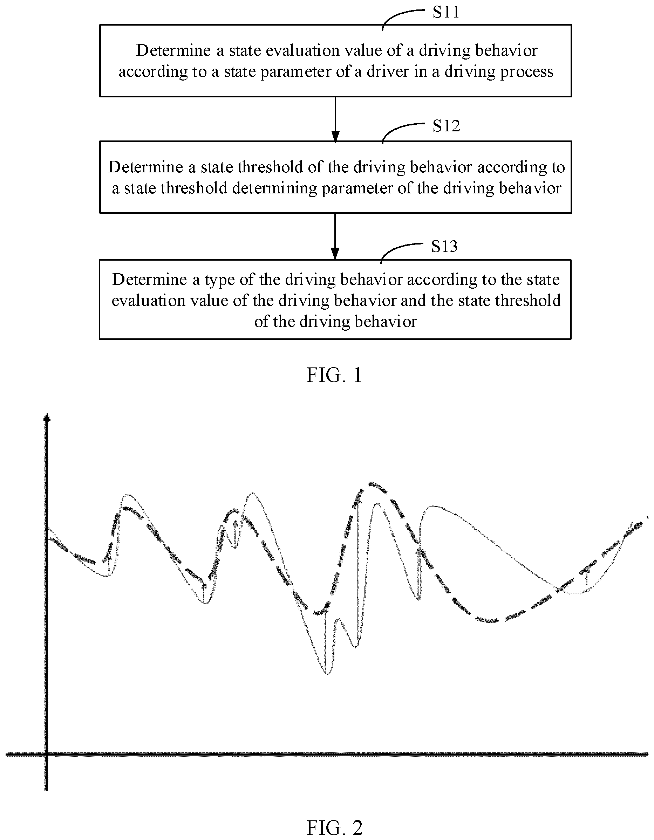

Referring to a schematic diagram of a working procedure shown in FIG. 1, a driving behavior monitoring method provided by embodiments of this application includes the following steps.

Step S11: Determine a state evaluation value of a driving behavior according to a state parameter of a driver in a driving process.

The state parameter usually includes at least one type, and the state parameter may be used to reflect a facial expression and/or physiological information of the driver, and the like.

Generally, in a running process of a vehicle, the state parameter of the driver may be periodically collected, and the state evaluation value of the driving behavior in each period is determined according to the state parameter.

Step S12: Determine a state threshold of the driving behavior according to a state threshold determining parameter of the driving behavior.

The state threshold determining parameter may include at least one type.

In embodiments of this application, if the driving behavior needs to be monitored, the corresponding state threshold may be determined according to the state threshold determining parameter of the driving behavior. Therefore, the threshold is not fixed.

Step S13: Determine a type of the driving behavior according to the state evaluation value of the driving behavior and the state threshold of the driving behavior.

In the running process of the vehicle, the state parameter of the driver may also be periodically collected, and the state evaluation value of the driving behavior in each period is determined according to the state parameter.

In embodiments of this application, the type of the driving behavior may be classified into an improper driving behavior and a normal driving behavior, or the type of the driving behavior may be further subdivided.

In addition, in the description of the foregoing embodiments and the schematic working flowchart shown in FIG. 1, after the state evaluation value of the driving behavior is determined, the state threshold of the driving behavior is determined. In an actual monitoring process, there is no strict time sequence limitation on the two steps. For example, the state threshold of the driving behavior may be first determined according to the state threshold determining parameter of the driving behavior, the state evaluation value of the driving behavior is then determined according to the state parameter of the driver in the driving process, or both the state evaluation value and threshold of the driving behavior may be determined. This is not limited in embodiments of this application.

In embodiments of this application, a time difference between a determining time point of the state evaluation value of the driving behavior and a determining time point of the state threshold of the driving behavior is usually within a specific time range. If the two times are closer, the type of the driving behavior determined in step S13 is usually more accurate.

The driving behavior monitoring method provided by embodiments of this application includes: determining, according to a state threshold determining parameter of a driving behavior, a state threshold for identifying the current driving behavior; determining a state evaluation value of the driving behavior according to a state parameter of a driver in a driving process; and determining a type of the driving behavior according to the evaluation value and the state threshold of the driving behavior. Therefore, according to the solutions provided by embodiments of this application, it can be determined whether the driving behavior is an improper driving behavior.

Further, in the solutions provided by embodiments of this application, a state threshold of a driving behavior is related to a state threshold determining parameter of the driving behavior. In a change process of the state threshold determining parameter of the driving behavior, the state threshold of the driving behavior also changes correspondingly. Therefore, a state threshold of the driving behavior determined in embodiments of this application better conforms to a current driving behavior monitoring scenario. Compared with a solution using a fixed threshold, in this application, accuracy of driving behavior monitoring can be effectively improved.

In the solutions provided by embodiments of this application, the state evaluation value of the driving behavior is determined based on the state parameter of the driver in the driving process. The state parameter may include: a facial expression parameter and/or a physiological information parameter.

In a feasible implementation, the facial expression parameter includes: a quantity of times of opening and closing eyes per unit time and/or a quantity of times of opening and closing the mouth per unit time.

The facial expression parameter may be obtained by using an imaging apparatus that shoots an image of the driver. The imaging apparatus may include a camera and/or a video camera. In an example, the camera may be a driver monitor system (driver monitor system, DMS) camera.

After photographing an image including the driver, the imaging apparatus may transmit the image to a driving behavior apparatus that executes the solutions in embodiments of this application. After receiving the image, the driving behavior apparatus analyzes the image, and determines the facial expression parameter according to an image analysis result.

Alternatively, after photographing an image including the driver, the imaging apparatus may analyze the image to determine the facial expression parameter of the driver, and then transmit the facial expression parameter to the driving behavior monitoring apparatus, so that the driving behavior monitoring apparatus obtains the facial expression parameter.

Generally, the imaging apparatus may be connected to the apparatus for performing the driving behavior monitoring method provided by embodiments of this application by using a serializer/deserializer.

In addition, in a feasible implementation, the physiological information parameter includes at least one of the following parameters: a quantity of pulses per unit time, a heart rate, blood pressure, and body temperature.

The physiological information parameter may be obtained by using an intelligent wearable device of the driver. The intelligent wearable device includes a plurality of types, for example, a smartwatch, a smart band, and the like. After the driver wears the intelligent wearable device, the intelligent wearable device may collect physiological information of the driver, and transmit the physiological information to the driving behavior apparatus that executes the solutions in embodiments of this application.

Further, in embodiments of this application, a time difference between a determining time point of the state parameter and a determining time point of the state assessment value is less than a first time period.

If the determining time point of the state parameter is closer to the determining time point of the evaluation value, the evaluation value is usually closer to an actual driving scenario. Specific duration of the first time period may be set according to a driving behavior monitoring requirement. Generally, a higher accuracy requirement for driving behavior monitoring indicates shorter specific duration of the first time period. For example, the first time period may be 1 minute.

In an existing driving behavior monitoring technology, only an image of a driver can be generally used to determine a facial expression change of the driver, and then it is determined, according to the facial expression change of the driver, whether a current driving behavior is an improper driving behavior. Alternatively, only physiological information of the driver can be used to determine whether the current driving behavior is an improper driving behavior. In this case, information used in the conventional technology is relatively simple, thereby resulting in relatively low accuracy of driving behavior monitoring.

However, in the solutions provided by embodiments of this application, the state parameter used to monitor the driving behavior may include both the facial expression parameter and the physiological information parameter. Compared with the conventional technology, information to which the solutions provided by embodiments of this application are applied is more diversified. Therefore, the accuracy of driving behavior monitoring can be further improved.

In the foregoing embodiments, an operation of determining a state evaluation value of a driving behavior according to a state parameter of a driver in a driving process is included. In embodiments of this application, the state evaluation value of the driving behavior may be determined by using the following formula:

$$w_{\text{evaluation}} = \frac{n1 - \sum_{i=1}^{n1}(\frac{C_i - C_{i0}}{C_{i0}})}{n1} \qquad \text{Formula (1)}$$

$w_{\text{evaluation}}$ is the state evaluation value of the driving behavior, $n1$ is a quantity of state parameters, $C_i$ is the $i^{\text{th}}$ state parameter, $C_{i0}$ is a reference value of the $i^{\text{th}}$ state parameter, $i$ and $n1$ are both positive integers, and $i \leq n1$.

The reference value of the $i^{\text{th}}$ state parameter is the $i^{\text{th}}$ state parameter of the driver in a normal driving process.

The driving behavior of the driver usually includes the normal driving behavior and the improper driving behavior, and the reference value of the state parameter is a state parameter determined by the driver in the normal driving process.

In embodiments of this application, state parameters of the driver in the normal driving process in different environments may be collected for a plurality of times in advance, and an average value of the state parameters collected for the plurality of times is calculated. The average value of the state parameters may be the reference value of the state parameters. In addition, the state parameter of the driver may be determined by using the imaging apparatus and/or the intelligent wearable device, and then the reference value and the state parameter are substituted into Formula (1), so as to obtain the state evaluation value of the driving behavior through calculation.

In other words, in embodiments of this application, the reference value of the state parameter may be the average value of the state parameters when the driver performs normal driving in different environments. The different environments may include different weather, places of different steepness degrees, places of different density degrees, and/or the like. This is not limited in embodiments of this application.

For example, if the state parameter includes blood pressure, blood pressure of the driver during normal driving in different environments may be collected for a plurality of times in advance, and then an average value of the collected blood pressure is calculated. The average value of the blood pressure is a reference value of the blood pressure.

In this embodiment, the state evaluation value of the driving behavior is determined by using $n1$ state parameters, where $n1$ is a positive integer. In an example, $n1$ is 5, and the five state parameters are respectively a quantity of times of opening and closing eyes per unit time, a quantity of times of opening and closing the mouth per unit time, a quantity of pulses per unit time, a heart rate, blood pressure, and body temperature.

In this case, the state evaluation value of the driving behavior may be determined by using the following formula:

$W_{\text{evaluation}}$ = (100% - ((Quantity of times of opening and closing eyes per unit time - Reference number of a quantity of times of opening and closing eyes per unit time)/Reference number of a quantity of times of opening and closing eyes per unit time) + 100% - ((Quantity of times of opening and closing the mouth per unit time - Reference number of a quantity of times of opening and closing the mouth per unit time)/Reference number of a quantity of times of opening and closing the mouth per unit time) + 100% - ((Quantity of pulses per unit time - Reference number of pulses per unit time)/Reference number of pulses per unit time) + 100% - ((Instantaneous blood pressure - Reference number of instantaneous blood pressure)/Reference number of instantaneous blood pressure) + 100% - ((Instantaneous body temperature - Reference number of instantaneous body temperature)/Reference number of instantaneous body temperature))/5.

In addition, in the foregoing embodiments, an operation of determining a state threshold of the driving behavior according to a state threshold determining parameter of the driving behavior is further provided. The state threshold determining parameter includes at least one of the following parameters: a danger coefficient of a location of the driver, a fatigue degree coefficient of the driver, a density degree coefficient of the location of the driver, or a danger coefficient of an environment in which the driver is located.

In the driving process, the vehicle travels to different locations, and danger coefficients of different locations are usually different. A location with a higher danger coefficient is more likely to have a traffic accident. For example, traffic accidents often occur at crossroads, and the danger coefficient is high. However, for a location with a relatively high danger coefficient, the driver usually needs to improve attention to avoid a traffic accident. Therefore, in embodiments of this application, it may be determined that the danger coefficient of the location of the driver is one of the state threshold determining parameters.

In addition, if the driver is relatively tired, fatigue driving may occur in the driving process of the driver, that is, an improper driving behavior occurs, thereby increasing a probability of occurrence of traffic accidents. Therefore, in embodiments of this application, it may also be determined that the fatigue degree coefficient of the driver is one of the state threshold determining parameters.

The density degree of the location of the driver also affects occurrence of traffic accidents. Generally, a denser location indicates a higher probability of occurrence of traffic accidents. Therefore, the density degree of the location of the driver may also be used as one of the state threshold determining parameters.

In addition, the danger coefficient of an environment in which the driver is located is usually related to visibility of the environment, a road steepness, and the like. In addition, a higher danger coefficient in an environment indicates a higher probability of traffic accidents in the environment. Therefore, the danger coefficient of the environment in which the driver is located may be further used as one of the state threshold determining parameters.

In addition to the foregoing parameters, another type of parameter may be used as the state threshold determining parameter. This is not limited in embodiments of this application.

Further, in embodiments of this application, a time difference between a determining time point of the state threshold determining parameter and a determining time point of the state threshold of the driving behavior is less than a second time period.

If the determining time point of the state threshold determining parameter is closer to the determining time point of the state threshold of the driving behavior, the state threshold of the driving behavior is usually closer to an actual driving scenario. Specific duration of the second time period may be set according to a driving behavior monitoring requirement. Generally, a higher accuracy requirement for driving behavior monitoring indicates shorter specific duration of the second time period. In addition, the first time period and the second time period may be the same or may be different. This is not limited in embodiments of this application. For example, the second time period may also be 1 minute.

In the foregoing embodiments, a plurality of forms of state threshold determining parameters are provided. To clarify manners of determining different state threshold determining parameters, this application further provides the following embodiments.

In a feasible implementation provided by this application, the danger coefficient of the location of the driver is determined by using the following formula:

$$k = (\sum_{l=1}^{n2} p_l * j_l) * v \qquad \text{Formula (2)}$$

$k$ is the danger coefficient of the location of the driver, $n2$ is a type of a traffic accident of a state target value at the location of the driver, $p_l$ is a probability that an $l^{th}$ type of target traffic accident occurs at the location of the driver, $j_l$ is a danger coefficient of the $l^{th}$ type of target traffic accident, $V$ is a vehicle speed, $l$ and $n2$ are both positive integers, $l \leq n2$, and the target traffic accident is a traffic accident whose occurrence probability is greater than a first probability.

The danger coefficient of the location of the driver is usually related to the probability that the traffic accident occurs at the location, the danger coefficient of the traffic accident, and the vehicle speed in the driving process. In this case, the danger coefficient of the location of the driver may be determined by using Formula (2).

In the solutions provided by embodiments of this application, a probability that a traffic accident occurs at each location on a map may be determined in advance with reference to the map and big data analysis. Alternatively, the probability that the traffic accident occurs at each location may be determined by querying a record of a traffic management center. Certainly, the probability of accidents at each location may alternatively be determined in another manner. This is not limited in embodiments of this application.

In the driving process, the location of the driver may be determined according to a global positioning system (global positioning system, GPS). The GPS may be connected to the driving behavior monitoring apparatus for performing the method in embodiments of this application, or the GPS is built in the driving behavior monitoring apparatus.

After the location of the driver is determined, a probability that various traffic accidents occur at the location of the driver is determined according to the location of the driver and the previously determined probability that the traffic accident occurs at each location, and the target traffic accident having a probability of occurrence greater than the first probability is further determined.

In addition, different traffic accidents often have different danger coefficients, and a traffic accident having a higher danger coefficient causes a larger harm to the driver. In the solutions provided by embodiments of this application, a correspondence between different traffic accidents and danger coefficients may be set. In this case, after the target traffic accident at the location of the driver is determined, the danger coefficient of the target traffic accident may be determined according to the correspondence.

In an example, the traffic accident may be divided into a minor accident, a general accident, a major accident, and an extra serious accident according to a consequence caused by the traffic accident. The minor accident refers to an accident in which one to two people are slightly injured at a time, or an amount of property loss caused by a motor vehicle accident is less than 1000 yuan and an amount of property loss caused by a non-motor vehicle accident is less than 200 yuan. The general accident refers to an accident in which one to two people are seriously injured at a time, or more than three people are slightly injured, or an amount of property loss is less than 30,000 yuan. The major accident refers to an accident in which one to two people are killed at a time, or more than three and less than 10 people are seriously injured, or an amount of property loss is more than 30,000 yuan and less than 60,000 yuan. The extra serious accident refers to an accident in which more than three people are killed at a time, or more than 11 people are seriously injured, or one person is killed while more than eight people are seriously injured, or two people are killed while more than five people are seriously injured, or an amount of property loss is more than 60,000 yuan.

In this example, danger coefficients corresponding to the minor accident, the general accident, the major accident, and the extra serious accident may be set to $\eta 1$, $\eta 2$, $\eta 3$, and $\eta 4$ respectively, where $\eta 1$, $\eta 2$, $\eta 3$, and $\eta 4$ are positive numbers in ascending order. For example, $\eta 1$ may be set to 0.1, $\eta 2$ may be set to 0.2, $\eta 3$ may be set to 0.3, and $\eta 4$ may be set to 0.4.

Certainly, the types of the traffic accidents may be further divided in another manner, and the danger coefficients corresponding to the traffic accidents of various types are separately set. This is not limited in embodiments of this application.

After the target traffic accident at the location of the driver and the danger coefficient of the target traffic accident are determined, the probability of occurrence and the danger coefficient of the target traffic accident are substituted into Formula (2), so that the danger coefficient of the location of the driver may be determined accordingly.

In addition, in embodiments of this application, the state threshold determining parameter may further include the fatigue degree coefficient of the driver. In the driving process of the driver, the fatigue degree of the driver is usually related to driving duration. In addition, longer driving duration indicates more fatigue of the driver.

In this case, in the solutions provided by embodiments of this application, the fatigue degree coefficient of the driver may be determined by using the following formula:

$$l = \begin{cases} 0, & t = 0 \\ \dfrac{t}{T} * 100\%, & 0 < t < T \\ 1, & t \geq T \end{cases} \qquad \text{Formula (3)}$$

$l$ is the fatigue degree coefficient of the driver, $t$ is driving duration of the driver, and $T$ is a first time length.

In embodiments of this application, the first time length may be set, and the first time length is usually a maximum time length in which the driver can maintain the normal driving behavior. When the driving duration of the driver is less than the first time length, the fatigue degree of the driver increases as the driving duration increases. When the driving duration of the driver reaches the first time length, the driver usually reaches a relatively high fatigue degree, and after the driving duration exceeds the first time length, the driving behavior of the driver is usually a fatigue driving behavior.

Article 62 of the Regulations for the Implementation of the Road Traffic Safety Law of the People's Republic of China stipulates that drivers shall stop for rest after driving motor vehicles for more than four hours continuously, and the rest time shall not be less than 20 minutes. In other words, the drivers are not allowed to drive the motor vehicles for more than four hours continuously. Therefore, in embodiments of this application, the first time length may be set to 4 hours.

In a feasible implementation, the density degree coefficient of the location of the driver is determined by using the following formula:

$$c = a1 * b1 + a2 * b2 + a3 * b3 \qquad \text{Formula (4)}$$

*C* is the density degree coefficient of the location of the driver, *a*1, *a*2, and *a*3 are positive numbers, *b*1 is a sum of quantities of pedestrians and vehicles in a first range from the location of the driver, *b*2 is a sum of quantities of pedestrians and vehicles in a second range from the location of the driver, and *b*3 is a sum of quantities of pedestrians and vehicles in a third range from the location of the driver.

The density degree coefficient of the location of the driver is related to a quantity of pedestrians and a quantity of vehicles around the location. Therefore, in embodiments of this application, the density degree coefficient is determined by using a sum of the quantity of pedestrians and the quantity of vehicles at the location of the driver in a specific range.

In embodiments of this application, the imaging apparatus may obtain a surrounding image of the location of the driver, and transmit the surrounding image to the apparatus for performing the driving behavior monitoring method in embodiments of this application. The apparatus may determine, by analyzing the surrounding image, quantities of pedestrians and vehicles in a specific range from the location of the driver.

In Formula (4), *a*1, *a*2, and *a*3 are positive numbers, and are respectively used to represent coefficients indicating that the quantities of pedestrians and vehicles in the first range, the second range, and the third range are related to the density degree, where a range closer to the location of the driver usually has a larger coefficient.

In an example, the first range is set to a distance within 30 meters from the location of the driver, the second range is set to a distance within 30 meters to 80 meters from the location of the driver, and the third range is set to a distance beyond 80 meters from the location of the driver, where *a*1 may be set to 0.5, *a*2 may be set to 0.3, and *a*3 may be set to 0.2.

Correspondingly, in this example, the density degree coefficient of the location of the driver may be determined by using the following formula:

c=0.5* (a sum of quantities of pedestrians and vehicles within 30 meters from the location of the driver) + 0.3* (a sum of quantities of pedestrians and vehicles within 30 to 80 meters from the location of the driver) + 0.2* (a sum of quantities of pedestrians and vehicles beyond 80 meters from the location of the driver).

In a feasible implementation provided by embodiments of this application, the danger coefficient of the environment in which the driver is located is determined by using the following formulas:

$$D = \partial / 90^0 * 100\% \qquad\qquad \text{Formula (5)}$$

$$m = (g - s) * a4 + D * a5 \qquad\qquad \text{Formula (6)}$$

*D* is a ground steepness degree of the location of the driver, $\partial$ is an angle between a body of a vehicle in which the driver is located and a horizontal plane, *g* is a the highest level of visibility level, *S* is a visibility level of the environment in which the driver is located, and *a*4 and *a*5 are positive numbers.

The danger coefficient of the environment in which the driver is located is often related to the ground steepness degree of the environment and the visibility of the environment. A higher ground steepness degree of the environment indicates a steeper ground, and correspondingly, the environment is more dangerous for the driving behavior.

In addition, the visibility of the environment in which the driver is located varies according to the weather and time. In addition, a lower visibility of the environment in which the driver is located indicates a lower probability that the driver avoids an obstacle in the driving process. Therefore, a lower visibility of the environment indicates a more dangerous environment for the driving behavior.

In the solutions provided by embodiments of this application, the ground steepness degree of the location of the driver may be determined by using Formula (5). In the formula, the angle $\partial$ between the body and the horizontal plane may be determined by using a gyroscope disposed on the vehicle. The gyroscope may transmit the detected angle $\partial$ to the driving behavior monitoring apparatus provided by embodiments of this application, and then the driving behavior monitoring apparatus substitutes the obtained angle $\partial$ into Formula (5), so as to determine the ground steepness degree *D* of the location of the driver. For example, the gyroscope may be a three-axis gyroscope.

In addition, in the solutions provided by embodiments of this application, visibility levels respectively corresponding to a plurality of visibility ranges may be further set, and a visibility range of the environment in which the driver is located is determined by using a visibility sensor. In this case, after detecting visibility of the environment in which the driver is located, the visibility sensor transmits the detected visibility to the driving behavior monitoring apparatus provided by embodiments of this application. The driving behavior monitoring apparatus determines a visibility level of the environment in which the driver is located according to the visibility range to which the obtained visibility belongs.

The visibility sensor may be disposed outside the vehicle, or the visibility sensor may be disposed around an intersection through which the vehicle passes, for example, may be disposed on a railing of the intersection through which the vehicle passes.

In Formula (6), *a*4 and *a*5 are respectively a proportion of the visibility level of the environment in which the driver is located in the danger coefficient of the environment, and a proportion of the ground steepness degree of the environment in which the driver is located in the danger coefficient of the environment.

In an example, both $a4$ and $a5$ are set to 0.5, and a total quantity of levels of the specified visibility level is 9. In this case, the danger coefficient of the environment in which the driver is located may be determined by using the following formula:

$$m=(9-S)*0.5+D*0.5$$

In the foregoing embodiments, different manners of determining the state threshold determining parameter are separately described. After the state threshold determining parameter is determined, the state threshold of the driving behavior may be determined by using the state threshold determining parameter. In embodiments of this application, the state threshold of the driving behavior may be determined by using the following formula:

$$v=\frac{\sum_{z=1}^{n2}p_z*r_z}{n3} \qquad \text{Formula (7)}$$

V is the state threshold of the driving behavior, $n3$ is a quantity of types of the state threshold determining parameter, $p_z$ is a weight of a $Z^{th}$ type of state threshold determining parameter, $r_z$ is the $Z^{th}$ type of state threshold determining parameter, $z$ and $n3$ are both positive integers, and $z \leq n3$.

In embodiments of this application, at least one type of state threshold determining parameter may be included, and the state threshold of the driving behavior is determined by using the at least one type of state threshold determining parameter.

In a feasible implementation, the state threshold of the driving behavior may be determined according to the following formula:

$$v=\frac{\sum_{z=1}^{n3}q_z*r_z}{n3} \qquad \text{Formula (8)}$$

V is the state threshold of the driving behavior, $n3$ is a quantity of types of the state threshold determining parameter, $q_z$ is a weight of a $Z^{th}$ type of state threshold determining parameter, $r_z$ is the $Z^{th}$ type of state threshold determining parameter, $z$ and $n3$ are both positive integers, and $z \leq n3$.

In Formula (8), the state threshold of the driving behavior is determined by using $n3$ types of state threshold determining parameters. In addition, weights of the $n3$ types of state threshold determining parameters meet this condition $\sum_{z=1}^{n3}q_z=1$, that is, a sum of the weights of the $n3$ types of state threshold determining parameters is equal to 1.

It can be learned from the foregoing various methods for determining types of state threshold determining parameters that the state threshold determining parameters are not fixed, but may be correspondingly adjusted based on an actual situation of the driving process, so that the state threshold of the driving behavior determined according to the state threshold determining parameters is closer to an actual driving scenario, thereby further improving the accuracy of driving behavior monitoring.

For example, the $n3$ types of state threshold determining parameters may include the danger coefficient of the location of the driver. It can be learned from the foregoing description that, when the danger coefficient of the location of the driver is determined, the danger coefficient of the traffic accident that is prone to occur at the location of the driver and the vehicle speed in the driving process are considered. Therefore, the state threshold of the driving behavior determined based on the danger coefficient of the location of the driver can change with the danger coefficient and the vehicle speed of the traffic accident that is prone to occur.

In addition, the $n3$ types of state threshold determining parameters may include the fatigue degree coefficient of the driver. It can be learned from the foregoing description that driving duration of the driver is considered when the fatigue degree coefficient of the driver is determined. In this case, the state threshold of the driving behavior determined based on the fatigue degree coefficient of the driver can change with the driving duration of the driver.

The $n3$ types of state threshold determining parameters may further include the density degree coefficient of the location of the driver. It can be learned from the foregoing description that when the density degree coefficient of the location of the driver is determined, quantities of vehicles and pedestrians around the location of the driver are considered. Therefore, the state threshold of the driving behavior determined based on the density degree coefficient can change with the quantities of vehicles and pedestrians around the location of the driver.

In addition, the *n3* types of state threshold determining parameters may further include the danger coefficient of the environment in which the driver is located. In addition, it can be learned from the foregoing description that when the danger coefficient of the environment in which the driver is located is determined, the visibility level of the environment in which the driver is located and the ground steepness degree of the location of the vehicle are considered. In this case, the state threshold of the driving behavior determined based on the danger coefficient of the environment in which the driver is located can change with the visibility level of the environment and the ground steepness degree.

In other words, when the state threshold of the driving behavior is determined by using the solutions in embodiments of this application, elements that affect the driving behavior in an actual driving scenario are considered, so that the state threshold of the driving behavior can better comply with the actual driving scenario, a monitoring requirement of driving behavior monitoring is met, and the accuracy of driving behavior monitoring is improved.

Further, in the conventional technology, a threshold used to determine whether the driving behavior is the improper driving behavior is usually fixed. If the threshold is relatively high, the driver always needs to maintain relatively high attention to maintain the normal driving behavior. The driver is always in a mentally tight state, and fatigue driving is more likely to occur, thereby resulting in a violation of the wish. However, if the threshold is relatively low, the improper driving behavior may be determined as the normal driving behavior, thereby increasing a probability of reducing monitoring accuracy.

However, the state threshold determined in the solutions provided by embodiments of this application may be adjusted with the actual driving scenario, so that monitoring accuracy can be improved, and the driver can be prevented from being always in the mentally tight state, thereby effectively relieving fatigue of the driver.

In the foregoing embodiments, operations of determining the state evaluation value of the driving behavior and the state threshold of the driving behavior are separately provided. After the state evaluation value and the threshold of the driving behavior are determined, the type of the driving behavior may be further determined according to the state evaluation value of the driving behavior and the state threshold of the driving behavior.

In embodiments of this application, the determining a type of the driving behavior according to the state evaluation value of the driving behavior and the state threshold of the driving behavior usually includes the following steps.

First, a state target value of the normal driving behavior is determined according to a reference value of a normal driving behavior and the state threshold of the driving behavior.

Then, the driving behavior is determined according to a comparison result between the state evaluation value of the driving behavior and the state target value of the normal driving behavior.

The reference value of the normal driving behavior is usually determined based on the reference value of each state parameter.

In a feasible implementation, the reference value of the normal driving behavior may be determined by using the following formula:

$$w_{\text{reference}} = \frac{n4 - \sum_{\beta=1}^{n4}\left(\frac{C_{\beta}' - C_{\beta 0}}{C_{\beta 0}}\right)}{n4} \qquad \text{Formula (9)}$$

In Formula (9), $w_{\text{reference}}$ is the reference value of the normal driving behavior, $n4$ is a quantity of state parameters for calculating the reference value of the normal driving behavior, $C_{\beta 0}$ is a reference value of the $\beta^{\text{th}}$ state parameter, $C_{\beta}$ is a minimum value of the $\beta^{\text{th}}$ state parameter when a normal driving state is maintained, $\beta$ and $n4$ are both positive integers, and $\beta \leq n4$.

The minimum value of the $\beta^{\text{th}}$ state parameter may be a maximum value of the $\beta$ th state parameter. When normal driving is maintained in different environments, values required by the same state parameter are usually different. For example, when driving in an area with a stable ground and a low population flow, a heart rate of the driver during the normal driving is relatively low, and when driving in an area with a steep ground and a dense population flow, the heart rate of the driver during the normal driving is relatively high. In this case, a minimum value of the heart rate is a maximum value of the heart rate of the driver during the normal driving.

In a feasible implementation, the state target value of the normal driving behavior is determined by using the following formula:

$$w_{\text{target}} = w_{\text{reference}} * (100\% + v) \qquad \text{Formula (10)}$$

$w_{\text{target}}$ is the state target value of the normal driving behavior, $w_{\text{reference}}$ is the reference value of the normal driving behavior, and *V* is the state threshold of the driving behavior. For example, if *V* is 20%, $w_{\text{target}}$ is 1.2 times of $w_{\text{reference}}$.

In embodiments of this application, the driving behavior may be divided into a normal driving behavior and an improper driving behavior. In this case, if the state evaluation value of the driving behavior is not less than the state target value of the driving behavior, the driving behavior may be considered as the normal driving behavior. In addition, If the state evaluation value of the driving behavior is less than the state target value of the driving behavior, the driving behavior may be considered as the improper driving behavior.

In an example, the state parameter for calculating the reference value of the normal driving behavior is set to the heart rate, and the reference value of the heart rate is 100. When the normal driving state is maintained, the minimum value of the heart rate is 120. In this case, $w_{reference}=(1-20/100)/1=80\%$ may be obtained through calculation based on the Formula (9).

In addition, in this example, the state threshold $V$ of the driving behavior is set to 20%, and the state target value $w_{target}$ of the normal driving behavior = 80%*(100%+20%)=96% may be obtained according to the Formula (10).

In this case, if it is detected that the actual heart rate of the driver is 105, the state evaluation value $w_{evaluation}$ of the driving behavior = (1-5/100)/1=95% may be obtained through calculation according to the Formula (1), and 95% < 96%. That is, the state evaluation value of the driving behavior is less than the state target value of the normal driving behavior, and it may be determined that the driving behavior is the improper driving behavior.

Further, in embodiments of this application, the improper driving behavior may be further subdivided. In this case, the improper driving behavior may be divided into a driving behavior indicating that the driver is in an abnormal driving state but has a driving ability and a driving behavior indicating that the driver is in an abnormal driving state and does not have a driving ability. In other words, in embodiments of this application, the driving behavior may be divided into three types: a normal driving behavior, a driving behavior indicating that the driver is in an abnormal driving state but has a driving ability, and a driving behavior indicating that the driver is in an abnormal driving state and does not have a driving ability.

In this case, in embodiments of this application, the determining the type of the driving behavior according to a comparison result between the state evaluation value of the driving behavior and the state target value of the normal driving behavior includes:

when a difference between the state evaluation value of the driving behavior and the state target value of the normal driving behavior is greater than a first threshold, determining that the driving behavior is the normal driving behavior;
when a difference between the state evaluation value of the driving behavior and the state target value of the normal driving behavior is greater than a second threshold and is not greater than the first threshold, determining that the driving behavior indicates that the driver is in an abnormal driving state but has a driving ability; or
when a difference between the state evaluation value of the driving behavior and the state target value of the normal driving behavior is not greater than the second threshold, determining that the driving behavior indicates that the driver is in an abnormal driving state and does not have a driving ability.

The first threshold is not less than 0, and the second threshold is a negative number.

In embodiments of this application, the first threshold is not less than 0. If the difference between the state evaluation value of the driving behavior and the state target value of the normal driving behavior is greater than the first threshold, it indicates that the state evaluation value of the driving behavior is greater than the state target value of the normal driving behavior. In this case, it may be determined that the driving behavior is the normal driving behavior.

In addition, the second threshold is a negative number. If the difference between the state evaluation value of the driving behavior and the state target value of the normal driving behavior is greater than the second threshold and is not greater than the first threshold, it indicates that the state evaluation value of the driving behavior is relatively close to the state target value of the normal driving behavior. In this case, it may be determined that the driving behavior indicates that the driver is in an abnormal driving state but has a driving ability.

If the difference between the state evaluation value of the driving behavior and the state target value of the normal driving behavior is not greater than the second threshold, the state evaluation value of the driving behavior is relatively small compared with the state target value of the normal driving behavior. In this case, it may be usually determined that the driving behavior indicates that the driver is in an abnormal driving state and does not have a driving ability.

By using the foregoing steps, the type of the driving behavior can be determined according to a comparison result between the state evaluation value of the driving behavior and the state target value of the normal driving behavior.

In addition, in the foregoing method for determining the type of the driving behavior, the state evaluation value of the driving behavior is compared with the state target value of the normal driving behavior, and the state target value of the normal driving behavior changes with the state threshold of the driving behavior. In different driving scenarios, the state threshold used to determine whether the driving behavior is the normal driving behavior is always adjusted. Therefore, in different driving scenarios, if the normal driving behavior is maintained, the driver may be in different states. Compared with a driving scenario with a relatively large state threshold, a driving scenario with a relatively small state threshold requires less attention of the driver to maintain the normal driving behavior.

In this case, the driver adjusts a driving state according to an actual driving scenario. In a driving scenario with a relatively small driving behavior threshold, attention of the driver with the normal driving behavior may be slightly reduced, so that the driver feels less exhausted. In a driving scenario with a relatively high driving behavior threshold, the attention of the driver with the normal driving behavior needs to be improved, thereby reducing occurrence of a traffic accident and improving driving safety.

For example, when the driver drives into a densely populated downtown in a sparsely populated area, the attention needs to be increased to maintain the normal driving behavior.

Correspondingly, embodiments of this application provide FIG. 2. FIG. 2 is a schematic diagram of a state evaluation value of a driving behavior and a state target value of a normal driving behavior. In a coordinate axis shown in FIG. 2, a horizontal axis represents driving times, a solid line represents state evaluation values of driving behaviors at different driving times, a dashed line represents state target values of normal driving behaviors at different driving times, and an arrow indicates that the driver needs to adjust the driving state.

In FIG. 2, at different driving times, the state target values of the normal driving behavior are also different due to different state thresholds of the driving behaviors. In addition, in this example, the first threshold is set to 0. If the state evaluation value of the driving behavior is greater than the state target value of the normal driving behavior, the driving behavior is the normal driving behavior. If the evaluation value of the driving behavior is not greater than the state target value of the normal driving behavior, the driving behavior is the improper driving behavior.

In addition, referring to the arrow shown in FIG. 2, it can be learned that if the driving behavior indicates that the driver is in an abnormal driving state but has a driving ability, the driver may be alerted to adjust the driving state, so as to enter a normal driving state.

In addition, it can be learned from FIG. 2 that, when the normal driving behavior is maintained, as the state target value of the normal driving behavior changes, the state evaluation value of the driving behavior may also change accordingly. Correspondingly, the state of the driver may be properly adjusted, so that the driver can be prevented from being always in a mentally tight state while the normal driving behavior is ensured, thereby reducing a fatigue driving state of the driver and improving traffic safety.

Further, after the type of the driving behavior is determined, if the driving behavior is not the normal driving behavior, to reduce occurrence of traffic accidents, in embodiments of this application, the following operations may further be included:

alerting the driver when the type of the driving behavior indicates that the driver is in an abnormal driving state but has a driving ability; and
parking the vehicle on a roadside when the driving behavior indicates that the driver is in an abnormal driving state and does not have a driving ability.

If the type of the driving behavior indicates that the driver is in an abnormal driving state but has a driving ability, it indicates that the driver may enter the normal driving state after adjusting the state of the driver. In this case, the driver may be alerted in embodiments of this application. Specifically, in embodiments of this application, multi-level information alerting may be performed. For example, an initial alert is a low-sound speech alert. If the state of the driver does not change after a plurality of speech alerts, a alert frequency and alert volume may be increased. In addition, the intelligent wearable device may be touched to vibrate intermittently. If the state of the driver does not change in this case, alert strength may continue to be increased until an engine shuts off, and the driving behavior is terminated.

In addition, if the driving behavior indicates that the driver is in an abnormal driving state and does not have a driving ability, to avoid a traffic accident, the vehicle is parked on a roadside, and the current driving behavior is terminated.

After being parked on the roadside, the vehicle may be controlled to turn on an emergency flasher, and a medical emergency center or a traffic police center may be contacted. In addition, if the driver presets contact information of an emergency contact in the apparatus for performing the driving behavior monitoring method provided by embodiments of this application, the driver may further contact the emergency contact.

Further, positioning information may be further sent to the emergency contact, the medical emergency center, or the traffic police center, physiological data such as a real-time thermal imaging image, a pulse, blood pressure, and body temperature may be transmitted to the medical emergency center or the traffic police center, and a call function of the intelligent wearable device is enabled.

However, in the conventional technology, after it is determined that the driving behavior is the improper driving behavior, the in-vehicle terminal usually sends alarm information to report an alarm to 110, thereby wasting a large quantity of police resources.

However, in the solutions provided by embodiments of this application, the improper driving behavior may be subdivided. The improper driving behavior may be divided into the driving behavior indicating that the driver is in an abnormal driving state but has a driving ability and the driving behavior indicating that the driver is in an abnormal driving state and does not have a driving ability. In addition, different alerting solutions are used to implement hierarchical alerts of the improper driving behavior. Compared with the conventional technology, the solutions in this application avoid a waste of police resources.

Further, the solutions provided by embodiments of this application further include the following step:

when determining, by using a sweat detector, that an alcohol content in sweat of the driver is less than a first content, triggering the vehicle to start.

If the alcohol content in the sweat of the driver is not less than the first content, it is generally considered that the driver is driving after being intoxicated (that is, in drunk driving). In this case, to improve traffic safety, the start of the vehicle is usually suspended. If the alcohol content in the sweat of the driver is less than the first content, it may be considered that the driver is not in drunk driving, and the vehicle may be triggered to start.

The sweat detector may be disposed on a side, close to the skin of the driver, of the intelligent wearable device worn by the driver. For example, if the intelligent wearable device may be a smartwatch, the sweat detector may be disposed on a back of a watch face of the smartwatch. Alternatively, if the intelligent wearable device may be a smart band, the sweat detector may be disposed on a side, close to a wrist, of the smart band. In addition, the intelligent wearable device provided with the sweat detector and the intelligent wearable device that obtains the physiological information parameter of the driver may be the same intelligent wearable device, or may be different intelligent wearable devices. This is not limited in embodiments of this application.

In addition, the sweat detector may be further disposed at a position on the vehicle. In this case, when the driver touches the position, the sweat detector disposed at the position may detect the alcohol content in the sweat of the driver. For example, the sweat detector may be disposed on a steering wheel of the vehicle.

The sweat detector may include: a sweat collection unit, an alcohol sensor, an analog-to-electrical converter, and a microcontroller unit (microcontroller unit, MCU). The sweat collection unit may be made of a material such as paper, a polymer fiber, or a hydrogel, and is configured to collect the sweat of the driver. The alcohol sensor and the analog-to-electrical converter quantize the alcohol content included in the sweat, and transmit a quantization result to the MCU. The MCU determines, according to the quantization result, whether the alcohol content in the sweat of the driver is less than the first content, and transmits the determined result to the apparatus for performing the driving behavior monitoring method provided by embodiments of this application. If it is determined, according to transmission of the MCU, that the alcohol content in the sweat of the driver is not less than the first content, it indicates that the driver is not suitable for driving, and the apparatus controls the vehicle to suspend starting. In addition, if it is determined, according to the transmission of the MCU, that the alcohol content in the sweat of the driver is less than the first content, it indicates that the driver is not in drunk driving, and the apparatus that performs the driving behavior monitoring method provided by embodiments of this application may allow the vehicle to start.

Alternatively, the sweat detector may include: a sweat collection unit, an alcohol sensor, and an analog-to-electrical converter. The sweat collection unit collects the sweat of the driver. The alcohol sensor and the analog-to-electrical converter quantize the alcohol content included in the sweat, and transmit a quantization result to the apparatus for performing the driving behavior monitoring method provided by embodiments of this application. The apparatus determines, according to the quantization result, whether the alcohol content in the sweat of the driver is less than the first content. If the alcohol content in the sweat of the driver is less than the first content, the apparatus allows the vehicle to start. If the alcohol content in the sweat of the driver is not less than the first content, the apparatus suspends the start of the vehicle.

In a currently commonly used solution, the smart band worn by the driver may collect gas exhaled by the driver, determine the alcohol content in the gas by analyzing the gas, and further determine whether the driver is in drunk driving.

However, when this solution is used, the gas exhaled by the driver is easily polluted by surrounding air, and some things contain alcohol-like ingredients. As a result, accuracy of determining whether the driver is in drunk driving is relatively low in this solution. In addition, in this solution, the alcohol content is usually detected in the driving process of the driver. In this case, the driver has started driving, thereby reducing road traffic safety.

However, in embodiments of this application, it is determined, by using the alcohol content in the sweat, whether the driver is in drunk driving. According to scientific research in recent years, there is a positive correlation between the alcohol content in human sweat and the alcohol content in blood. It is efficient and clean to perform determining by using the alcohol content in the sweat, which is not easily affected by external air, and has relatively high reliability, thereby improving the accuracy of determining whether the driver is in drunk driving.

Further, in embodiments of this application, the vehicle is triggered to start only when it is determined that the alcohol content in the sweat of the driver is less than the first content. However, if it is determined that the alcohol content in the sweat of the driver is not less than the first content, the vehicle is not allowed to start. Therefore, compared with the conventional technology, drunk driving can be avoided, and road traffic safety is further improved.

In addition, in embodiments of this application, the method may further include the following step:

when a fingerprint of the driver matches a stored fingerprint library, triggering the vehicle to start.

The fingerprint library stores a pre-collected fingerprint of at least one driver. That the fingerprint of the driver matches the fingerprint library means that the fingerprint of the driver and a fingerprint in the fingerprint library are fingerprints of a same person.

Identity authentication of the driver can be implemented through fingerprint matching, so that only the driver whose fingerprint is collected in advance and stored in the fingerprint library is allowed to drive the vehicle, thereby further improving traffic safety.

In embodiments of this application, a fingerprint collection apparatus may be disposed on the intelligent wearable device of the driver or the vehicle. The fingerprint collection apparatus may collect the fingerprint of the driver, and transmit the collected fingerprint to the apparatus that performs the driving behavior monitoring method provided by embodiments of this application. The apparatus then matches and compares the fingerprint with the fingerprint library, so as to determine whether the fingerprint of the driver matches the fingerprint library.

Alternatively, in embodiments of this application, the fingerprint matching apparatus may be disposed on the intelligent wearable device of the driver or the vehicle, and the fingerprint matching apparatus includes the fingerprint library. In this case, the fingerprint matching apparatus may collect the fingerprint of the driver, match the collected fingerprint with the fingerprint library, and transmit a matching result to the apparatus that performs the driving behavior monitoring method provided by embodiments of this application. The apparatus determines, according to the received matching result, whether to trigger the vehicle to start.

In the foregoing embodiments, the solutions in which the start of the vehicle is triggered only when the alcohol content in the sweat of the driver is less than the first content and the fingerprint of the driver matches the fingerprint library are separately provided. In addition, the vehicle may be triggered to start only when both the two conditions are met, thereby further improving the traffic safety.

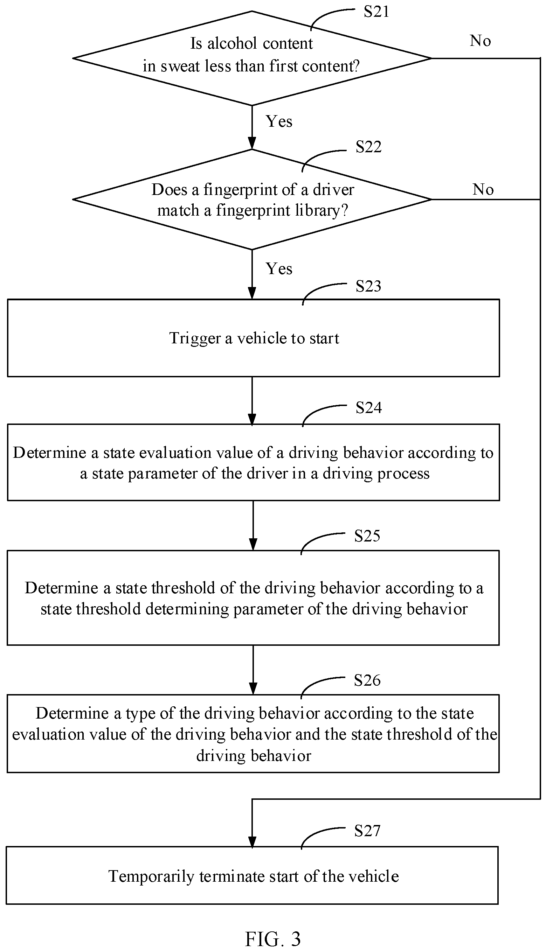

To clarify this solution, embodiments of this application further provide FIG. 3. Referring to a schematic diagram of a working procedure shown in FIG. 3, the method includes the following steps.

Step S21: Determine, by using a sweat detector, whether an alcohol content in sweat of a driver is less than a first content; and if the alcohol content in the sweat of the driver is less than the first content, perform an operation of step S22, or if the alcohol content in the sweat of the driver is not less than the first content, perform an operation of step S27.

The sweat detector fits the skin of the driver, and may collect sweat on the skin of the driver, quantize the alcohol content included in the sweat, and transmit a quantization result to the apparatus for performing the driving behavior monitoring method provided by embodiments of this application. The apparatus determines, according to the quantization result, whether the alcohol content in the sweat of the driver is less than the first content.

Alternatively, the sweat detector may determine, according to the collected sweat, whether the alcohol content in the sweat is less than the first content, and transmit a determining result to the apparatus for performing the driving behavior monitoring method provided by embodiments of this application.

Step S22: Determine whether a fingerprint of the driver matches a stored fingerprint library; and if the fingerprint of the driver matches the stored fingerprint library, perform an operation of step S23, or if the fingerprint of the driver does not match the stored fingerprint library, perform an operation of step S27.

The fingerprint library stores a pre-collected fingerprint of at least one driver. Identity authentication of the driver can be implemented through fingerprint matching.

Step S23: Trigger a vehicle to start, so that the driver drives the vehicle.

In other words, the vehicle is started only after it is determined, by performing operations in step S21 and step S22, that the driver is not in drunk driving and an identity of the driver is authenticated.

Step S24: Determine a state evaluation value of a driving behavior according to a state parameter of the driver in a driving process.

Step S25: Determine a state threshold of the driving behavior according to a state threshold determining parameter of the driving behavior.

Step S26: Determine a type of the driving behavior according to the state evaluation value of the driving behavior and the state threshold of the driving behavior.

A specific operation process of step S24 to step S26 is the same as a specific operation process of step S11 to step S13. Mutual reference may be made, and details are not described herein again.

Step S27: Temporarily terminate start of the vehicle.

In the solutions disclosed by step S21 to step S27, the vehicle can be started only when both the condition that the alcohol content in the sweat of the driver is less than the first content and the condition that the fingerprint of the driver matches the stored fingerprint library are met, so that traffic safety can be further improved.

In addition, in both the foregoing steps and the schematic diagram shown in FIG. 3, that the alcohol content in the sweat of the driver is less than the first content is determined before whether the fingerprint of the driver matches the stored fingerprint library is determined. In an actual application scenario, there is no strict time sequence between the two steps. It may be first determined that the fingerprint of the driver matches the stored fingerprint library, and then it is determined whether the alcohol content in the sweat of the driver is less than the first content. Alternatively, the two steps are performed at the same time.

The following provides apparatus embodiments of this application that may be used to execute the method embodiments of this application. For details not disclosed by apparatus embodiments of this application, refer to the method embodiments of this application.

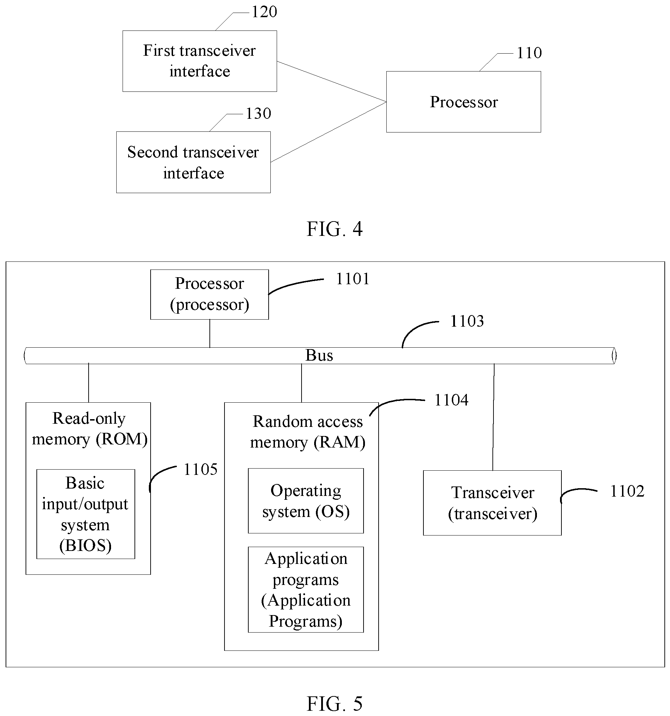

As implementation of the foregoing embodiments, embodiments of this application disclose a driving behavior monitoring apparatus. Referring to a schematic structural diagram shown in FIG. 4, the driving behavior monitoring apparatus disclosed by embodiments of this application includes: a processor 110, a first transceiver interface 120, and a second transceiver interface 130.

The first transceiver interface 120 is configured to obtain a state parameter of a driver in a driving process.

The second transceiver interface 130 is configured to obtain a state threshold determining parameter of a driving behavior.

The processor 110 is configured to determine a state evaluation value of the driving behavior according to the state parameter of the driver in the driving process, and determine a state threshold of the driving behavior according to the state threshold determining parameter of the driving behavior.

The processor 110 is further configured to determine a type of the driving behavior according to the state evaluation value of the driving behavior and the state threshold of the driving behavior.

By using the driving behavior monitoring apparatus provided by embodiments of this application, a state threshold for identifying a current driving behavior can be determined according to a state threshold determining parameter of the driving behavior, a state evaluation value of the driving behavior can be determined according to a state parameter of a driver in a driving process, and a type of the driving behavior can be then determined according to the evaluation value and the state threshold of the driving behavior. Therefore, according to the solutions provided by embodiments of this application, it can be determined whether the driving behavior is an improper driving behavior.

Further, in the solutions provided by embodiments of this application, a state threshold of a driving behavior is related to a state threshold determining parameter of the driving behavior. In a change process of the state threshold determining parameter of the driving behavior, the state threshold of the driving behavior also changes correspondingly. Therefore, a state threshold of the driving behavior determined in embodiments of this application better conforms to a current driving behavior monitoring scenario. Compared with a solution using a fixed threshold, in this application, accuracy of driving behavior monitoring can be effectively improved.

In embodiments of this application, the state parameter usually includes at least one type, and the state parameter may be used to reflect a facial expression and/or physiological information of the driver, and the like.

In a feasible solution, the state parameter includes: a facial expression parameter and/or a physiological information parameter.

The facial expression parameter includes: a quantity of times of opening and closing eyes per unit time and/or a quantity of times of opening and closing the mouth per unit time.

The physiological information parameter includes at least one of the following parameters: a quantity of pulses per unit time, a heart rate, blood pressure, and body temperature.

A time difference between a determining time point of the state parameter and a determining time point of the evaluation value is less than a first time period.

The facial expression parameter is obtained by using an imaging apparatus that shoots an image of the driver.

The physiological information parameter is obtained by using an intelligent wearable device of the driver.

In this case, the first transceiver interface 120 may be separately connected to the imaging apparatus and/or the intelligent wearable device, so as to obtain the facial expression parameter and/or the physiological information parameter.

In embodiments of this application, the processor determines the state evaluation value of the driving behavior by using the following formula:

$$w_{\text{evaluation}} = \frac{n1 - \sum_{i=1}^{n1}\left(\frac{C_i - C_{i0}}{C_{i0}}\right)}{n1},$$

where

$w_{\text{evaluation}}$ is the state evaluation value of the driving behavior, $n1$ is a quantity of state parameters, $C_i$ is the $i^{\text{th}}$ state parameter, $C_{i0}$ is a reference value of the $i^{\text{th}}$ state parameter, $i$ and $n1$ are both positive integers, and $i \leq n1$; and the reference value of the $i^{\text{th}}$ state parameter is the $i^{\text{th}}$ state parameter of the driver in a normal driving process.

In embodiments of this application, the state threshold determining parameter may include at least one type. The state threshold determining parameter includes at least one of the following parameters: a danger coefficient of a location of the driver, a fatigue degree coefficient of the driver, a density degree coefficient of the location of the driver, or a danger coefficient of an environment in which the driver is located.

A time difference between a determining time point of the state threshold determining parameter and a determining time point of the state threshold of the driving behavior is less than a second time period.

In a feasible implementation provided in this application, the processor determines the danger coefficient of the location of the driver by using the following formula:

$$k = (\sum_{l=1}^{n2} p_l * j_l) * v,$$

where

$k$ is the danger coefficient of the location of the driver, $n2$ is a type of a traffic accident of a state target value at the location of the driver, $p_l$ is a probability that an $l^{th}$ type of target traffic accident occurs at the location of the driver, $j_l$ is a danger coefficient of the $l^{th}$ type of target traffic accident, $V$ is a vehicle speed, $l$ and $n2$ are both positive integers, $l \leq n2$, and the target traffic accident is a traffic accident whose occurrence probability is greater than a first probability.

In a feasible implementation provided in this application, the processor determines the fatigue degree coefficient of the driver by using the following formula:

$$l = \begin{cases} 0, & t = 0 \\ \dfrac{t}{T} * 100\%, & 0 < t < T \\ 1, & t \geq T \end{cases},$$

where

$l$ is the fatigue degree coefficient of the driver, $t$ is driving duration of the driver, and $T$ is a first time length.

In a feasible implementation provided in this application, the processor determines the density degree coefficient of the location of the driver by using the following formula:

$$c = a1 * b1 + a2 * b2 + a3 * b3,$$

where

$C$ is the density degree coefficient of the location of the driver, $a1$, $a2$, and $a3$ are positive numbers, $b1$ is a sum of quantities of pedestrians and vehicles in a first range from the location of the driver, $b2$ is a sum of quantities of pedestrians and vehicles in a second range from the location of the driver, and $b3$ is a sum of quantities of pedestrians and vehicles in a third range from the location of the driver.

In a feasible implementation provided in this application, the processor determines the danger coefficient of the environment in which the driver is located by using the following formulas:

$$D = \partial / 90^0 * 100\%,$$

and

$$m = (g - s) * a4 + D * a5,$$

where

$D$ is a ground steepness degree of the location of the driver, $\partial$ is an angle between a body of a vehicle in which the driver is located and a horizontal plane, $g$ is a the highest level of visibility level, $S$ is a visibility level of the environment in which the driver is located, and $a4$ and $a5$ are positive numbers.

In a feasible implementation provided in this application, the processor determines the state threshold of the driving behavior according to the following formula:

$$v = \frac{\sum_{z=1}^{n3} q_z * r_z}{n3},$$

where

V is the state threshold of the driving behavior, $n3$ is a quantity of types of the state threshold determining parameter, $q_z$ is a weight of a $Z^{th}$ type of state threshold determining parameter, $r_z$ is the $Z^{th}$ type of state threshold determining parameter, $z$ and $n3$ are both positive integers, and $z \leq n3$.

In addition, weights of $n3$ types of state threshold determining parameters meet this condition $\sum\limits_{z=1}^{n3} q_z = 1$, that is, a sum of the weights of the $n3$ types of state threshold determining parameters is equal to 1.

In embodiments of this application, the processor is specifically configured to: determine a state target value of the normal driving behavior according to a reference value of a normal driving behavior and the state threshold of the driving behavior; and

determine the type of the driving behavior according to a comparison result between the state evaluation value of the driving behavior and the state target value of the normal driving behavior.

In a feasible implementation, the processor determines the state target value of the normal driving behavior by using the following formula:

$$ w_{\text{target}} = w_{\text{reference}} * (100\% + v), $$

where

$w_{\text{target}}$ is the state target value of the normal driving behavior, $w_{\text{reference}}$ is the reference value of the normal driving behavior, and $V$ is the state threshold of the driving behavior.

In embodiments of this application, the driving behavior may be divided into a normal driving behavior and an improper driving behavior. In this case, if the state evaluation value of the driving behavior is not less than the state target value of the driving behavior, the driving behavior may be considered as the normal driving behavior. In addition, If the state evaluation value of the driving behavior is less than the state target value of the driving behavior, the driving behavior may be considered as the improper driving behavior.

Further, in embodiments of this application, the improper driving behavior may be further subdivided. In this case, the improper driving behavior may be divided into a driving behavior indicating that the driver is in an abnormal driving state but has a driving ability and a driving behavior indicating that the driver is in an abnormal driving state and does not have a driving ability. In other words, in embodiments of this application, the driving behavior may be divided into three types: a normal driving behavior, a driving behavior indicating that the driver is in an abnormal driving state but has a driving ability, and a driving behavior indicating that the driver is in an abnormal driving state and does not have a driving ability.

In this case, the processor may divide the driving behavior in the following manners.

When a difference between the state evaluation value of the driving behavior and the state target value of the normal driving behavior is greater than a first threshold, the processor determines that the driving behavior is the normal driving behavior.

When a difference between the state evaluation value of the driving behavior and the state target value of the normal driving behavior is greater than a second threshold and is not greater than the first threshold, the processor determines that the driving behavior indicates that the driver is in an abnormal driving state but has a driving ability.

When a difference between the state evaluation value of the driving behavior and the state target value of the normal driving behavior is not greater than the second threshold, the processor determines that the driving behavior indicates that the driver is in an abnormal driving state and does not have a driving ability.

The first threshold is not less than 0, and the second threshold is a negative number.

By using the foregoing solution, the type of the driving behavior can be determined according to a comparison result between the state evaluation value of the driving behavior and the state target value of the normal driving behavior.

Further, after the type of the driving behavior is determined, if the driving behavior is not a normal driving behavior, to reduce occurrence of traffic accidents, in embodiments of this application, the processor is further configured to alert the driver when the type of the driving behavior indicates that the driver is in an abnormal driving state but has a driving ability, and park the vehicle on a roadside when the driving behavior indicates that the driver is in an abnormal driving state and does not have a driving ability.

Further, in the solutions provided by embodiments of this application, the processor is further configured to: when determining, by using a sweat detector, that an alcohol content in sweat of the driver is less than a first content, trigger the vehicle to start.

Further, in the solutions provided by embodiments of this application, the processor is further configured to: when a fingerprint of the driver matches a stored fingerprint library, trigger the vehicle to start.

Corresponding to the foregoing driving behavior monitoring method, embodiments of this application further disclose a terminal apparatus accordingly. Referring to a schematic structural diagram shown in FIG. 5, the terminal apparatus includes:

at least one processor 1101 and a memory.

The memory is configured to store program instructions.

The processor is configured to invoke and execute the program instructions stored in the memory, so that the terminal apparatus performs all or some of the steps in embodiments corresponding to FIG. 1 and FIG. 3.

The terminal apparatus may further include a transceiver 1102 and a bus 1103, and the memory includes a random access memory 1104 and a read-only memory 1105.

The processor is separately coupled to the transceiver, the random access memory, and the read-only memory by using the bus. When a terminal apparatus needs to run, a basic input/output system built into the read-only memory or a bootloader booting system in an embedded system is started to boot the apparatus to enter a normal running state. After the apparatus enters the normal running state, an application program and an operating system run in the random access memory, so that the terminal apparatus performs all or some of the steps in embodiments corresponding to FIG. 1 and FIG. 3.

The apparatus in embodiments of this application may correspond to the driving behavior monitoring apparatus in embodiments corresponding to FIG. 1 and FIG. 3. In addition, the processor and the like in the terminal apparatus may implement functions and/or steps and methods implemented by the driving behavior monitoring apparatus in embodiments corresponding to FIG. 1 and FIG. 3. For brevity, details are not described herein again.

It should be noted that, in this embodiment, a network device may also be implemented based on a general-purpose physical server in combination with a network function virtualization (network function virtualization, NFV) technology. The network device is a virtual network device (for example, a virtual host, a virtual router, or a virtual switch). The virtual network device may be a virtual machine (virtual machine, VM) running a program used to send an advertisement packet. The virtual machine is deployed on a hardware device (for example, a physical server). The virtual machine is a software-simulated complete computer system that has complete hardware system functions and runs in a completely isolated environment. A person skilled in the art may virtually create, on a general physical server, a plurality of network devices having the foregoing functions by reading this application. Details are not described herein.

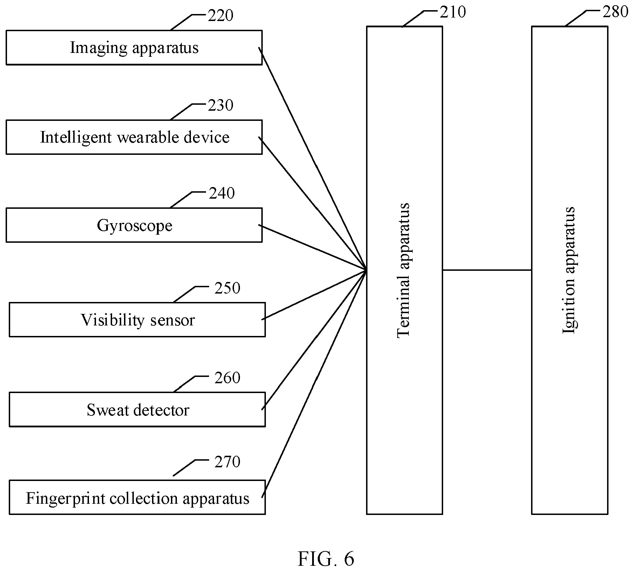

The terminal apparatus may be implemented in a plurality of forms. In an implementation form, referring to a schematic diagram of a connection relationship shown in FIG. 6, the terminal apparatus 210 may be connected to apparatuses such as an imaging apparatus 220, an intelligent wearable device 230, a gyroscope 240, a visibility sensor 250, a sweat detector 260, and a fingerprint collection apparatus 270, and may receive, by using a first transceiver interface and a second transceiver interface, information transmitted by the apparatuses, so as to determine a state evaluation value of a driving behavior and a state threshold of the driving behavior by using the received information, thereby determining a type of the driving behavior.

In this implementation, the terminal apparatus may be an in-vehicle processor, or the terminal apparatus may be a remote processor. When the terminal apparatus is a remote processor, after determining the type of the driving behavior, the remote processor may further transmit the determined type of the driving behavior to a corresponding vehicle.

Further, in this implementation, the terminal apparatus 210 may be further connected to an ignition apparatus 280, so as to control start and parking of the vehicle according to the driving behavior.

Alternatively, in another implementation, the terminal apparatus disclosed by embodiments of this application is any one of apparatuses such as an imaging apparatus, an intelligent wearable device, a gyroscope, a visibility sensor, a sweat detector, and a fingerprint collection apparatus. Another apparatus may be connected to the apparatus, so that the apparatus obtains, by using a first transceiver interface and a second transceiver interface, information transmitted by the another apparatus, and determines the type of the driving behavior accordingly.

Certainly, the terminal apparatus may alternatively be implemented in another form. This is not limited in embodiments of this application.

In specific implementation, embodiments of this application further provide a computer-readable storage medium. The computer-readable storage medium includes instructions. When a computer-readable medium disposed in any device runs on a computer, all or some of the steps in embodiments corresponding to FIG. 1 and FIG. 3 may be implemented. A storage medium of the computer-readable medium may be a magnetic disk, an optical disc, a read-only memory (read-only memory, ROM), a random access memory (random access memory, RAM), or the like.

In addition, other embodiments of this application further disclose a computer program product including instructions. When the computer program product runs on an electronic device, the electronic device is enabled to perform all or some of the steps in embodiments corresponding to FIG. 1 and FIG. 3.

Further, embodiments of this application further disclose a smart vehicle. The smart vehicle includes the driving behavior monitoring apparatus or the terminal apparatus disclosed by the foregoing embodiments of this application. In this case, the driving behavior monitoring apparatus or the terminal apparatus is usually carried by a chip, an integrated circuit, and/or a processor built in the vehicle. The at least one processor and the memory may be carried by different integrated circuits and/or processors, or the at least one processor and the memory may be carried by one chip, one integrated circuit, or one processor.

In addition, at least one sensor may be further built in the smart vehicle, and information required in a driving behavior monitoring process is obtained by using the sensor. The sensor may include an in-vehicle imaging apparatus, gyroscope, visibility sensor, sweat detector, and/or fingerprint collection apparatus. Alternatively, the smart vehicle may be connected to a remote sensor in a wireless manner, and information required in the driving behavior monitoring process is determined by using the remote sensor.

Embodiments of this application further disclose a driving behavior monitoring system. The system can determine a type of a driving behavior by using the method disclosed by the foregoing embodiments of this application. The system includes a terminal apparatus, and further includes an imaging apparatus, a gyroscope, a visibility sensor, a sweat detector, and/or a fingerprint collection apparatus. The type of the driving behavior is determined according to information transmitted by the apparatuses and by using the solutions disclosed by the foregoing embodiments.

In an example, a schematic diagram of the system is shown in FIG. 6. Referring to FIG. 6, the terminal apparatus 210 in the system may be connected to apparatuses such as an imaging apparatus 220, an intelligent wearable device 230, a gyroscope 240, a visibility sensor 250, a sweat detector 260, and a fingerprint collection apparatus 270, and monitor the driving behavior according to information transmitted by the apparatuses. Further, the terminal apparatus 210 may further control an ignition apparatus 280 in the system according to a driving behavior monitoring result, so as to start a vehicle or park the vehicle.

Various illustrative logic units and circuits described in embodiments of this application may implement or operate the described functions by designing a general-purpose processor, a digital information processor, an application specific integrated circuit (application specific integrated circuit, ASIC), a field programmable gate array (field programmable gate array, FPGA) or another programmable logic apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital information processor and a microprocessor, a plurality of microprocessors, one or more microprocessors with a digital information processor core, or any other similar configuration.

Steps of the methods or algorithms described in embodiments of this application may be directly embedded into hardware, a software unit executed by a processor, or a combination thereof. The software unit may be stored in a random access memory (random access memory, RAM), a flash memory, a read-only memory (read-only memory, ROM), an erasable programmable read-only memory (erasable programmable read-only memory, EPROM), an electrically erasable programmable read only memory (electrically erasable programmable read only memory, EEPROM), a register, a hard disk, a removable magnetic disk, a compact disc read-only memory (compact disc read-only memory, CD-ROM), or a storage medium of any other form in the art. For example, the storage medium may be connected to a processor, so that the processor may read information from the storage medium and write information into the storage medium. Optionally, the storage medium may alternatively be integrated into the processor. The processor and the storage medium may be disposed in an ASIC. The ASIC may be disposed in user equipment (user equipment, UE). Optionally, the processor and the storage medium may be arranged in different components of the UE.

It should be understood that sequence numbers of the processes do not mean an execution sequence in various embodiments of this application. The execution sequence of the processes should be determined based on functions and internal logic of the processes, and should not be construed as any limitation on implementation processes of embodiments of this application.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD), a semiconductor medium (for example, a solid state disk (solid state disk, SSD)), or the like.

For same or similar parts in embodiments in this specification, refer to these embodiments. Each embodiment focuses on a difference from other embodiments. Especially, apparatus and system embodiments are basically similar to method embodiments, and therefore are described briefly. For related parts, refer to partial descriptions in the method embodiments.

A person skilled in the art may clearly understand that, the technologies in embodiments of this application may be implemented by using software in addition to a necessary general hardware platform. Based on such an understanding, the technical solutions in embodiments of this application essentially or the part contributing to the prior art may be implemented in a form of a software product. The computer software product may be stored in a storage medium, such as a ROM/RAM, a magnetic disk, or an optical disc, and includes several instructions for instructing a computer device (which may be a personal computer, a server, a network device, or the like) to perform the methods described in embodiments or some parts of embodiments of this application.

For same or similar parts in embodiments of this specification, refer to each other. Especially, the road constraint determining apparatus embodiments disclosed by this application are basically similar to the method embodiments, and therefore are described briefly. For related parts, refer to descriptions in the method embodiments.

The foregoing implementations of this application are not intended to limit the protection scope of this application.

**Claims**

1. A driving behavior monitoring method, comprising:

   determining (S11; S24) a state evaluation value of a driving behavior according to a state parameter of a driver in a driving process;
   determining (S12; S25) a state threshold of the driving behavior according to a state threshold determining parameter of the driving behavior; and
   determining (S13; S26) a type of the driving behavior according to the state evaluation value of the driving behavior and the state threshold of the driving behavior; wherein
   the determining (S13) a type of the driving behavior according to the state evaluation value of the driving behavior and the state threshold of the driving behavior comprises:

      determining a state target value of the normal driving behavior according to a reference value of a normal driving behavior and the state threshold of the driving behavior; and
      determining the type of the driving behavior according to a comparison result between the state evaluation value of the driving behavior and the state target value of the normal driving behavior.

2. The method according to claim 1, wherein

   the state parameter comprises: a facial expression parameter and/or a physiological information parameter;
   the facial expression parameter comprises: a quantity of times of opening and closing eyes per unit time and/or a quantity of times of opening and closing the mouth per unit time;
   the physiological information parameter comprises at least one of the following parameters: a quantity of pulses per unit time, a heart rate, blood pressure, and body temperature; and
   a time difference between a determining time point of the state parameter and a determining time point of the state evaluation value is less than a first time period.

3. The method according to claim 2, wherein

   the facial expression parameter is obtained by using an imaging apparatus (220) that shoots an image of the driver; and
   the physiological information parameter is obtained by using an intelligent wearable device (230) of the driver.

4. The method according to claim 2 or 3, wherein the state evaluation value of the driving behavior is determined by using the following formula:

$$w_{\text{evaluation}} = \frac{n1 - \sum_{i=1}^{n1} \left( \frac{C_i - C_{i0}}{C_{i0}} \right)}{n1},$$

wherein

$w_{\text{evaluation}}$ is the state evaluation value of the driving behavior, $n1$ is a quantity of state parameters, $C_i$ is the $i^{\text{th}}$ state parameter, $C_{i0}$ is a reference value of the $i^{\text{th}}$ state parameter, $i$ and $n1$ are both positive integers, and $i \leq n1$; and the reference value of the $i^{\text{th}}$ state parameter is the $i^{\text{th}}$ state parameter of the driver in a normal driving process.

5. The method according to claim 1, wherein

the state threshold determining parameter comprises at least one of the following parameters: a danger coefficient of a location of the driver, a fatigue degree coefficient of the driver, a density degree coefficient of the location of the driver, or a danger coefficient of an environment in which the driver is located; and a time difference between a determining time point of the state threshold determining parameter and a determining time point of the state threshold of the driving behavior is less than a second time period.

6. The method according to claim 5, wherein the danger coefficient of the location of the driver is determined by using the following formula:

$$k = (\sum_{l=1}^{n2} p_l * j_l) * v,$$

wherein

$k$ is the danger coefficient of the location of the driver, $n2$ is a type of a traffic accident of a state target value at the location of the driver, $p_l$ is a probability that an $l^{\text{th}}$ type of target traffic accident occurs at the location of the driver, $j_l$ is a danger coefficient of the $l^{\text{th}}$ type of target traffic accident, $V$ is a vehicle speed, $l$ and $n2$ are both positive integers, $l \leq n2$, and the target traffic accident is a traffic accident whose occurrence probability is greater than a first probability;
the fatigue degree coefficient of the driver is determined by using the following formula:

$$l = \begin{cases} 0, & t = 0 \\ \dfrac{t}{T} * 100\%, & 0 < t < T \\ 1, & t \geq T \end{cases},$$

wherein
$l$ is the fatigue degree coefficient of the driver, $t$ is driving duration of the driver, and $T$ is a first time length;
the density degree coefficient of the location of the driver is determined by using the following formula:

$$c = a1 * b1 + a2 * b2 + a3 * b3,$$

wherein
$C$ is the density degree coefficient of the location of the driver, $a1$, $a2$, and $a3$ are positive numbers, $b1$ is a sum of quantities of pedestrians and vehicles in a first range from the location of the driver, $b2$ is a sum of quantities of pedestrians and vehicles in a second range from the location of the driver, and $b3$ is a sum of quantities of pedestrians and vehicles in a third range from the location of the driver; and
the danger coefficient of the environment in which the driver is located is determined by using the following formulas:

$$D = \partial / 90^0 * 100\%,$$

and

$$m = (g - s) * a4 + D * a5,$$

wherein

*D* is a ground steepness degree of the location of the driver, $\partial$ is an angle between a body of a vehicle in which the driver is located and a horizontal plane, *g* is a the highest level of visibility level, *S* is a visibility level of the environment in which the driver is located, and *a*4 and *a*5 are positive numbers.

7. The method according to any one of claims 1 to 6, wherein the state threshold of the driving behavior is determined according to the following formula:

$$v = \frac{\sum_{z=1}^{n3} q_z * r_z}{n3},$$

   wherein
   *V* is the state threshold of the driving behavior, *n*3 is a quantity of types of the state threshold determining parameter, $q_z$ is a weight of a *Z*<sup>th</sup> type of state threshold determining parameter, $r_z$ is the *Z*<sup>th</sup> type of state threshold determining parameter, *z* and *n*3 are both positive integers, and $z \leq n3$.

8. The method according to claim 1, wherein the state target value of the normal driving behavior is determined by using the following formula:

$$w_{\text{target}} = w_{\text{reference}} * (100\% + v),$$

   wherein
   $w_{\text{target}}$ is the state target value of the normal driving behavior, $w_{\text{reference}}$ is the reference value of the normal driving behavior, and *V* is the state threshold of the driving behavior.

9. The method according to claim 1 or 8, wherein the determining the type of the driving behavior according to a comparison result between the state evaluation value of the driving behavior and the state target value of the normal driving behavior comprises:

   when a difference between the state evaluation value of the driving behavior and the state target value of the normal driving behavior is greater than a first threshold, determining that the driving behavior is the normal driving behavior;
   when a difference between the state evaluation value of the driving behavior and the state target value of the normal driving behavior is greater than a second threshold and is not greater than the first threshold, determining that the driving behavior indicates that the driver is in an abnormal driving state but has a driving ability; or
   when a difference between the state evaluation value of the driving behavior and the state target value of the normal driving behavior is not greater than the second threshold, determining that the driving behavior indicates that the driver is in an abnormal driving state and does not have a driving ability, wherein
   the first threshold is not less than 0, and the second threshold is a negative number.

10. The method according to claim 9, further comprising:

   alerting the driver when the type of the driving behavior indicates that the driver is in an abnormal driving state but has a driving ability; and
   parking the vehicle on a roadside when the driving behavior indicates that the driver is in an abnormal driving state and does not have a driving ability.

11. The method according to any one of claims 1 to 10, further comprising:
   when determining (S21), by using a sweat detector (260), that an alcohol content in sweat of the driver is less than a first content, triggering (S23) the vehicle to start.

12. The method according to any one of claims 1 to 10, further comprising:
   when a fingerprint of the driver matches (S22) a stored fingerprint, triggering (S23) the vehicle to start.

13. A terminal apparatus (210), comprising:

at least one processor (110, 1101) and a memory (1104, 1105), wherein
the memory (1104, 1105) is configured to store program instructions; and
the processor (110, 1101) is configured to invoke and execute the program instructions stored in the memory (1104, 1105), so that the terminal apparatus (210) performs the driving behavior monitoring method according to any one of claims 1 to 12.

14. A computer-readable storage medium, wherein
the computer-readable storage medium stores instructions, and when the instructions are run on a computer, the computer is enabled to perform the driving behavior monitoring method according to any one of claims 1 to 12.

**Patentansprüche**

1. Verfahren zur Überwachung des Fahrverhaltens, das umfasst:

Bestimmen (S11; S24) eines Zustandsbewertungswerts eines Fahrverhaltens gemäß einem Zustandsparameter eines Fahrers bei einem Fahrvorgang;
Bestimmen (S12; S25) eines Zustandsschwellenwerts des Fahrverhaltens gemäß einem den Zustandsschwellenwert bestimmenden Parameter des Fahrverhaltens und Bestimmen (S13; S26) einer Art des Fahrverhaltens gemäß dem Zustandsbewertungswert des Fahrverhaltens und dem Zustandsschwellenwert des Fahrverhaltens; wobei
das Bestimmen (S13) einer Art des Fahrverhaltens gemäß dem Zustandsbewertungswert des Fahrverhaltens und dem Zustandsschwellenwert des Fahrverhaltens umfasst:

Bestimmen eines Zustandszielwerts des normalen Fahrverhaltens gemäß einem Referenzwert eines normalen Fahrverhaltens und dem Zustandsschwellenwert des Fahrverhaltens und
Bestimmen der Art des Fahrverhaltens gemäß einem Vergleichsergebnis zwischen dem Zustandsbewertungswert des Fahrverhaltens und dem Zustandszielwert des normalen Fahrverhaltens.

2. Verfahren nach Anspruch 1, wobei

der Zustandsparameter umfasst: einen Gesichtsausdruckparameter und/oder einen physiologischen Informationsparameter;
der Gesichtsausdruckparameter umfasst: eine Anzahl von Malen des Öffnens und Schließens der Augen pro Zeiteinheit und/oder eine Anzahl von Malen des Öffnens und Schließens des Mundes pro Zeiteinheit;
der physiologische Informationsparameter mindestens einen der folgenden Parameter umfasst: eine Pulsanzahl pro Zeiteinheit, eine Herzfrequenz, einen Blutdruck und eine Körpertemperatur; und
eine Zeitdifferenz zwischen einem Bestimmungszeitpunkt des Zustandsparameters und einem Bestimmungszeitpunkt des Zustandsbewertungswerts kleiner als eine erste Zeitspanne ist.

3. Verfahren nach Anspruch 2, wobei

der Gesichtsausdruckparameter durch Verwenden einer Bildgebungseinrichtung (220) erlangt wird, die ein Bild des Fahrers aufnimmt; und
der physiologische Informationsparameter durch Verwenden einer intelligenten am Körper tragbaren Vorrichtung (230) des Fahrers erlangt wird.

4. Verfahren nach Anspruch 2 oder 3, wobei der Zustandsbewertungswert des Fahrverhaltens durch Verwenden der folgenden Formel bestimmt wird:

$$W_{\text{Bewertung}} = \frac{n1 - \sum_{i=1}^{n1} \left( \frac{C_i - C_{i0}}{C_{i0}} \right)}{n1},$$

wobei
$W_{\text{Bewertung}}$ der Zustandsbewertungswert des Fahrverhaltens ist, $n1$ eine Anzahl von Zustandsparametern ist, $C_i$ der $i$-

te Zustandsparameter ist, $C_{i0}$ ein Referenzwert des i-ten Zustandsparameters ist, $i$ und $n1$ beide positive ganze Zahlen sind und $i \leq n1;$ und der Referenzwert des i-ten Zustandsparameters der $i$-te Zustandsparameter des Fahrers bei einem normalen Fahrvorgang ist.

5. Verfahren nach Anspruch 1, wobei

der den Zustandsschwellenwert bestimmende Parameter mindestens einen der folgenden Parameter umfasst: einen Gefahrenkoeffizienten eines Orts des Fahrers, einen Ermüdungsgradkoeffizienten des Fahrers, einen Dichtegradkoeffizienten des Orts des Fahrers oder einen Gefahrenkoeffizienten einer Umgebung, in der sich der Fahrer befindet; und
eine Zeitdifferenz zwischen einem Bestimmungszeitpunkt des den Zustandsschwellenwert bestimmenden Parameters und einem Bestimmungszeitpunkt des Zustandsschwellenwerts des Fahrverhaltens kleiner als eine zweite Zeitspanne ist.

6. Verfahren nach Anspruch 5, wobei der Gefahrenkoeffizient des Orts des Fahrers durch Verwenden der folgenden Formel bestimmt wird:

$$k = (\sum_{l=1}^{n2} p_l * j_l) * v,$$

wobei

$k$ der Gefahrenkoeffizient des Orts des Fahrers ist, n2 eine Art eines Verkehrsunfalls eines Zustandszielwerts am Ort des Fahrers ist, $p_l$ eine Wahrscheinlichkeit ist, dass eine $l$-te Art eines Zielverkehrsunfalls am Ort des Fahrers eintritt, $j_l$ ein Gefahrenkoeffizient der $l$-ten Art eines Zielverkehrsunfalls ist, $v$ eine Fahrzeuggeschwindigkeit ist, $l$ und $n2$ beide positive ganze Zahlen sind, $l \leq n2$ und der Zielverkehrsunfall ein Verkehrsunfall ist, dessen Eintrittswahrscheinlichkeit größer als eine erste Wahrscheinlichkeit ist;
der Ermüdungsgradkoeffizient des Fahrers durch Verwenden der folgenden Formel bestimmt wird:

$$l = \begin{cases} 0, & t = 0 \\ \dfrac{t}{T} * 100\%, & 0 < t < T \\ 1, & t \geq T \end{cases},$$

wobei
$l$ der Ermüdungsgradkoeffizient des Fahrers ist, $t$ die Lenkzeit des Fahrers ist und $T$ eine erste Zeitdauer ist;
der Dichtegradkoeffizient des Orts des Fahrers durch Verwenden der folgenden Formel bestimmt wird:

$$c = a1 * b1 + a2 * b2 + a3 * b3,$$

wobei
c der Dichtegradkoeffizient des Orts des Fahrers ist, a1, a2 und a3 positive Zahlen sind, b1 eine Summe von Anzahlen von Fußgängern und Fahrzeugen in einem ersten Bereich vom Ort des Fahrers aus ist, b2 eine Summe von Anzahlen von Fußgängern und Fahrzeugen in einem zweiten Bereich vom Ort des Fahrers aus ist und $b3$ eine Summe von Anzahlen von Fußgängern und Fahrzeugen in einem dritten Bereich vom Ort des Fahrers aus ist; und
der Gefahrenkoeffizient der Umgebung, in der sich der Fahrer befindet, durch Verwenden der folgenden Formeln bestimmt wird:

$$D = \partial/90° * 100\%$$

und

EP 4 197 871 B1

$$m = (g - s)* a4 + D * a5,$$

wobei

D ein Grad der Geländesteilheit des Orts des Fahrers ist, $\partial$ ein Winkel zwischen einer Karosserie eines Fahrzeugs, in dem sich der Fahrer befindet, und einer horizontalen Ebene ist, g die höchste Sichtbarkeitsstufe ist, $S$ eine Sichtbarkeitsstufe der Umgebung, in der sich der Fahrer befindet, ist und a4 und a5 positive Zahlen sind.

7. Verfahren nach einem der Ansprüche 1 bis 6, wobei der Zustandsschwellenwert des Fahrverhaltens gemäß der folgenden Formel bestimmt wird:

$$v = \frac{\sum_{z=1}^{n3} q_z * r_z}{n3},$$

wobei

v der Zustandsschwellenwert des Fahrverhaltens ist, n3 eine Anzahl von Arten des den Zustandsschwellenwert bestimmenden Parameters ist, $q_z$ ein Gewicht einer Z-ten Art eines den Zustandsschwellenwert bestimmenden Parameters ist, $r_z$ die Z-te Art eines den Zustandsschwellenwert bestimmenden Parameters ist, z und n3 beide positive ganze Zahlen sind und $z \leq n3.$

8. Verfahren nach Anspruch 1, wobei der Zustandszielwert des normalen Fahrverhaltens durch Verwenden der folgenden Formel bestimmt wird:

$$w_{Ziel} = w_{Referenz} * (100 \% + v),$$

wobei

$W_{Ziel}$ der Zustandszielwert des normalen Fahrverhaltens ist, $W_{Referenz}$ der Referenzwert des normalen Fahrverhaltens ist und v der Zustandsschwellenwert des Fahrverhaltens ist.

9. Verfahren nach Anspruch 1 oder 8, wobei das Bestimmen der Art des Fahrverhaltens gemäß einem Vergleichsergebnis zwischen dem Zustandsbewertungswert des Fahrverhaltens und dem Zustandszielwert des normalen Fahrverhaltens umfasst:

wenn eine Differenz zwischen dem Zustandsbewertungswert des Fahrverhaltens und dem Zustandszielwert des normalen Fahrverhaltens größer als ein erster Schwellenwert ist, Bestimmen, dass das Fahrverhalten das normale Fahrverhalten ist;
wenn eine Differenz zwischen dem Zustandsbewertungswert des Fahrverhaltens und dem Zustandszielwert des normalen Fahrverhaltens größer als ein zweiter Schwellenwert und nicht größer als der erste Schwellenwert ist, Bestimmen, dass das Fahrverhalten darauf hindeutet, dass sich der Fahrer in einem abnormalen Fahrzustand befindet, aber fahrtüchtig ist; oder
wenn eine Differenz zwischen dem Zustandsbewertungswert des Fahrverhaltens und dem Zustandszielwert des normalen Fahrverhaltens nicht größer als der zweite Schwellenwert ist, Bestimmen, dass das Fahrverhalten darauf hindeutet, dass sich der Fahrer in einem abnormalen Fahrzustand befindet und nicht fahrtüchtig ist, wobei der erste Schwellenwert nicht kleiner als 0 ist und der zweite Schwellenwert eine negative Zahl ist.

10. Verfahren nach Anspruch 9, das ferner umfasst:

Warnen des Fahrers, wenn die Art des Fahrverhaltens darauf hindeutet, dass sich der Fahrer in einem abnormalen Fahrzustand befindet, aber fahrtüchtig ist; und
Parken des Fahrzeugs am Straßenrand, wenn das Fahrverhalten darauf hindeutet, dass der Fahrer sich in einem abnormalen Fahrzustand befindet und nicht fahrtüchtig ist.

11. Verfahren nach einem der Ansprüche 1 bis 10, das ferner umfasst:
wenn durch Verwenden eines Schweißdetektors (260) bestimmt wird (S21), dass der Alkoholgehalt im Schweiß des Fahrers geringer ist als ein erster Gehalt, Auslösen (S23) des Startens des Fahrzeugs.

31

**12.** Verfahren nach einem der Ansprüche 1 bis 10, das ferner umfasst:
wenn ein Fingerabdruck des Fahrers mit einem gespeicherten Fingerabdruck übereinstimmt (S22), Auslösen (S23) des Startens des Fahrzeugs.

**13.** Endeinrichtung (210), die umfasst:

mindestens einen Prozessor (110, 1101) und einen Speicher (1104, 1105), wobei der Speicher (1104, 1105) konfiguriert ist, um Programmanweisungen zu speichern; und
der Prozessor (110, 1101) konfiguriert ist, um die in dem Speicher (1104, 1105) gespeicherten Programmanweisungen aufzurufen und auszuführen, so dass die Endeinrichtung (210) das Verfahren zur Überwachung des Fahrverhaltens nach einem der Ansprüche 1 bis 12 durchführt.

**14.** Computerlesbares Speicherungsmedium, wobei
das computerlesbare Speicherungsmedium Anweisungen speichert, und wenn die Anweisungen auf einem Computer ausgeführt werden, der Computer dazu befähigt wird, das Verfahren zur Überwachung des Fahrverhaltens nach einem der Ansprüche 1 bis 12 durchzuführen.

**Revendications**

**1.** Procédé de surveillance de comportement de conduite, comprenant :

la détermination (S11 ; S24) d'une valeur d'évaluation d'état d'un comportement de conduite selon un paramètre d'état d'un conducteur dans un processus de conduite ; la détermination (S12 ; S25) d'un seuil d'état du comportement de conduite selon un paramètre de détermination de seuil d'état du comportement de conduite ; et la détermination (S13 ; S26) d'un type du comportement de conduite selon la valeur d'évaluation d'état du comportement de conduite et du seuil d'état du comportement de conduite ; dans lequel la détermination (S13) d'un type du comportement de conduite selon la valeur d'évaluation d'état du comportement de conduite et le seuil d'état du comportement de conduite comprend :

la détermination d'une valeur cible d'état du comportement de conduite normal selon une valeur de référence d'un comportement de conduite normal et le seuil d'état du comportement de conduite ; et
la détermination du type du comportement de conduite selon un résultat de comparaison entre la valeur d'évaluation d'état du comportement de conduite et la valeur cible d'état du comportement de conduite normal.

**2.** Procédé selon la revendication 1, dans lequel

le paramètre d'état comprend : un paramètre d'expression faciale et/ou un paramètre d'informations physiologiques ;
le paramètre d'expression faciale comprend : une quantité de temps d'ouverture et de fermeture des yeux par unité de temps et/ou une quantité de temps d'ouverture et de fermeture de la bouche par unité de temps ;
le paramètre d'informations physiologiques comprend au moins l'un parmi les paramètres suivants : une quantité d'impulsions par unité de temps, une fréquence cardiaque, une pression artérielle et une température corporelle ; et
une différence de temps entre un point temporel de détermination du paramètre d'état et un point temporel de détermination de la valeur d'évaluation d'état est inférieure à une première période de temps.

**3.** Procédé selon la revendication 2, dans lequel

le paramètre d'expression faciale est obtenu en utilisant un appareil d'imagerie (220) qui prend une image du conducteur ; et
le paramètre d'informations physiologiques est obtenu en utilisant un dispositif portable intelligent (230) du conducteur.

**4.** Procédé selon la revendication 2 ou 3, dans lequel la valeur d'évaluation d'état du comportement de conduite est déterminée en utilisant la formule suivante :

$$W_{\text{évaluation}} = \frac{n1 - \sum_{i=1}^{n1}(\frac{C_i - C_{i0}}{C_{i0}})}{n1},$$

où

$W_{\text{évaluation}}$ représente la valeur d'évaluation d'état du comportement de conduite, n1 représente une quantité de paramètres d'état, $C_i$ représente le $i$ ième paramètre d'état, $C_{i0}$ représente une valeur de référence du $i$ ième paramètre d'état, $i$ et n1 représentent tous deux des nombres entiers positifs, et $i \le n1$ ; et la valeur de référence du $i$ ième paramètre d'état est le $i$ ième paramètre d'état du conducteur dans un processus de conduite normal.

5. Procédé selon la revendication 1, dans lequel

le paramètre de détermination de seuil d'état comprend au moins l'un parmi les paramètres suivants : un coefficient de danger d'un emplacement du conducteur, un coefficient de degré de fatigue du conducteur, un coefficient de degré de densité de l'emplacement du conducteur, ou un coefficient de danger d'un environnement dans lequel se trouve le conducteur ; et
une différence de temps entre un point temporel de détermination du paramètre de détermination de seuil d'état et un point temporel de détermination du seuil d'état du comportement de conduite est inférieure à une seconde période de temps.

6. Procédé selon la revendication 5, dans lequel le coefficient de danger de l'emplacement du conducteur est déterminé en utilisant la formule suivante :

$$k = (\sum_{l=1}^{n2} p_l * j_l) * v,$$

où

$k$ représente le coefficient de danger de l'emplacement du conducteur, $n2$ représente un type d'un accident de la circulation d'une valeur cible d'état au niveau de l'emplacement du conducteur, $p_l$ représente une probabilité qu'un $l$ ième type d'accident de la circulation cible se produise au niveau de l'emplacement du conducteur, $j_l$ représente un coefficient de danger du $l$ ième type d'accident de la circulation cible, $v$ représente une vitesse de véhicule, $l$ et n2 représentent tous deux des nombres entiers positifs, $l \le n2$, et l'accident de la circulation cible est un accident de la circulation dont la probabilité d'occurrence est supérieure à une première probabilité ;
le coefficient de degré de fatigue du conducteur est déterminé en utilisant la formule suivante :

$$l = \begin{cases} 0, & t = 0 \\ \frac{t}{T} * 100\%, & 0 < t < T \\ 1, & t \ge T \end{cases},$$

où
$l$ représente le coefficient de degré de fatigue du conducteur, $t$ représente une durée de conduite du conducteur, et T représente une première longueur de temps ;
le coefficient de degré de densité de l'emplacement du conducteur est déterminé en utilisant la formule suivante :

$$c = a1 * b1 + a2 * b2 + a3 * b3,$$

où
c représente le coefficient de degré de densité de l'emplacement du conducteur, a1, a2 et a3 sont des nombres positifs, b1 est une somme de quantités de piétons et de véhicules dans un premier rayon à partir de l'emplacement du conducteur, b2 représente une somme de quantités de piétons et de véhicules dans un deuxième rayon à partir de l'emplacement du conducteur, et b3 représente une somme de quantités de piétons et de véhicules dans un troisième rayon à partir de l'emplacement du conducteur ; et

le coefficient de danger de l'environnement dans lequel se trouve le conducteur est déterminé en utilisant les formules suivantes :

$$D = \partial / 90° * 100 \%,$$

et

$$m = (g - s) * a4 + D * a5,$$

où

$D$ représente un degré d'inclinaison du sol de l'emplacement du conducteur, $\partial$ représente un angle entre une carrosserie d'un véhicule dans lequel se trouve le conducteur et un plan horizontal, $g$ représente un niveau de visibilité le plus élevé, S représente un niveau de visibilité de l'environnement dans lequel se trouve le conducteur, et a4 et a5 sont des nombres positifs.

7. Procédé selon l'une quelconque des revendications 1 à 6, dans lequel le seuil d'état du comportement de conduite est déterminé selon la formule suivante :

$$v = \frac{\sum_{z=1}^{n3} q_z * r_z}{n3},$$

où

v représente le seuil d'état du comportement de conduite, $n3$ représente une quantité de types du paramètre de détermination de seuil d'état, $q_z$ représente un poids d'un Z [ième] type de paramètre de détermination de seuil d'état, $r_z$ représente le Z [ième] type de paramètre de détermination de seuil d'état, z et n3 sont tous deux des nombres entiers positifs, et $z \leq n3$.

8. Procédé selon la revendication 1, dans lequel la valeur cible d'état du comportement de conduite normal est déterminée en utilisant la formule suivante :

$$w_{cible} = w_{référence} * (100 \% + v),$$

où

$w_{cible}$ représente la valeur cible d'état du comportement de conduite normal, $w_{référence}$ est la valeur de référence du comportement de conduite normal, et $v$ représente le seuil d'état du comportement de conduite.

9. Procédé selon la revendication 1 ou 8, dans lequel la détermination du type du comportement de conduite selon un résultat de comparaison entre la valeur d'évaluation d'état du comportement de conduite et la valeur cible d'état du comportement de conduite normal comprend :

lorsqu'une différence entre la valeur d'évaluation d'état du comportement de conduite et la valeur cible d'état du comportement de conduite normal est supérieure à un premier seuil, le fait de déterminer que le comportement de conduite est le comportement de conduite normal ;
lorsqu'une différence entre la valeur d'évaluation d'état du comportement de conduite et la valeur cible d'état du comportement de conduite normal est supérieure à un second seuil et n'est pas supérieure au premier seuil, le fait de déterminer que le comportement de conduite indique que le conducteur est dans un état de conduite anormal mais qu'il a une capacité de conduite ; ou
lorsqu'une différence entre la valeur d'évaluation d'état du comportement de conduite et la valeur cible d'état du comportement de conduite normal n'est pas supérieure au second seuil, le fait de déterminer que le comportement de conduite indique que le conducteur est dans un état de conduite anormal et qu'il n'a pas une capacité de conduite, dans lequel le premier seuil n'est pas inférieur à 0, et le second seuil est un nombre négatif.

**10.** Procédé selon la revendication 9, comprenant en outre :

le fait d'alerter le conducteur lorsque le type du comportement de conduite indique que le conducteur est dans un état de conduite anormal mais qu'il a une capacité de conduite ; et
le stationnement du véhicule sur un bord de route lorsque le comportement de conduite indique que le conducteur est dans un état de conduite anormal et qu'il n'a pas une capacité de conduite.

**11.** Procédé selon l'une quelconque des revendications 1 à 10, comprenant en outre :
lors du fait de déterminer (S21), en utilisant un détecteur de sueur (260), qu'un taux d'alcool dans la sueur du conducteur est inférieur à un premier taux, le déclenchement (S23) du démarrage du véhicule.

**12.** Procédé selon l'une quelconque des revendications 1 à 10, comprenant en outre :
lorsqu'une empreinte digitale du conducteur correspond (S22) à une empreinte digitale stockée, le déclenchement (S23) du démarrage du véhicule.

**13.** Appareil terminal (210), comprenant :

au moins un processeur (110, 1101) et une mémoire (1104, 1105), dans lequel la mémoire (1104, 1105) est configurée pour stocker des instructions de programme ; et
le processeur (110, 1101) est configuré pour appeler et exécuter les instructions de programme stockées dans la mémoire (1104, 1105), de sorte que l'appareil terminal (210) effectue le procédé de surveillance de comportement de conduite selon l'une quelconque des revendications 1 à 12.

**14.** Support de stockage lisible par ordinateur, dans lequel
le support de stockage lisible par ordinateur stocke des instructions, et lorsque les instructions sont exécutées sur un ordinateur, l'ordinateur est activé pour effectuer le procédé de surveillance de comportement de conduite selon l'une quelconque des revendications 1 à 12.

S11

Determine a state evaluation value of a driving behavior according to a state parameter of a driver in a driving process

S12

Determine a state threshold of the driving behavior according to a state threshold determining parameter of the driving behavior

S13

Determine a type of the driving behavior according to the state evaluation value of the driving behavior and the state threshold of the driving behavior

FIG. 1

FIG. 2

S21

Is alcohol content
in sweat less than first content?

No

Yes

S22

Does a fingerprint of a driver
match a fingerprint library?

No

Yes

S23

Trigger a vehicle to start

S24

Determine a state evaluation value of a driving behavior according to
a state parameter of the driver in a driving process

S25

Determine a state threshold of the driving behavior according to a
state threshold determining parameter of the driving behavior

S26

Determine a type of the driving behavior according to the state
evaluation value of the driving behavior and the state threshold of the
driving behavior

S27

Temporarily terminate start of the vehicle

FIG. 3

First transceiver interface ——120

——110 Processor

——130 Second transceiver interface

FIG. 4

Processor (processor) ——1101

——1103 Bus

Read-only memory (ROM) ——1105

Basic input/output system (BIOS)

——1104 Random access memory (RAM)

Operating system (OS)

Application programs (Application Programs)

Transceiver (transceiver) ——1102

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013116856 A1

- US 2020241525 A